# EUROPEAN PATENT APPLICATION

(11) **EP 4 773 689 A1**
(43) Date of publication of application: **08.07.2026**
(21) Application number: 24860284.9
(22) Date of filing: 20.08.2024
(51) Int. Cl.: H04W 56/00, H04W 48/10, H04W 74/00, H04W 84/06

(54) **METHOD, USER EQUIPMENT, PROCESSING DEVICE, AND STORAGE MEDIUM FOR RECEIVING DOWNLINK SIGNAL, AND METHOD, BASE STATION, PROCESSING DEVICE, AND STORAGE MEDIUM FOR TRANSMITTING DOWNLINK SIGNAL**

(30) Priority: 01.09.2023 KR 20230116453
(71) Applicant: Hyundai Mobis Co., Ltd., Gangnam-gu Seoul 06141 (KR)
(72) Inventor: KIM, Tae Hyoung, Cheonan-si, Chungcheongnam-do 31168 (KR)
(74) Representative: Jung, Minkyu
(86) International application number: PCT/KR2024/012345
(87) International publication number: WO 2025/048363

(57) **Abstract**

A UE attempts to detect an SSB on a first frequency band supporting a TN and an NTN, and performs an initial access procedure on the basis of the detected SSB, wherein the attempt to detect the SSB may be performed with priority on a cell having a high priority from among a TN cell and an NTN cell on the basis of priorities that are set for the TN cell and the NTN cell.

## Description

### TECHNICAL FIELD

The present disclosure relates to a wireless communication system.

### BACKGROUND

A variety of technologies, such as machine-to-machine (M2M) communication, machine type communication (MTC), and a variety of devices demanding high data throughput, such as smartphones and tablet personal computers (PCs), have emerged and spread. Accordingly, the volume of data throughput demanded to be processed in a cellular network has rapidly increased. To satisfy such rapidly increasing data throughput, carrier aggregation technology or cognitive radio technology for efficiently employing more frequency bands and multiple input multiple output (MIMO) technology or multi-base station (BS) cooperation technology for raising data capacity transmitted on limited frequency resources have been developed.

Recently, support for wireless communication services through non-terrestrial networks (NTNs) has been considered to provide wireless communication services in places in which terrestrial connections are technically very difficult or expensive to provide wireless communication services through terrestrial networks.

### DISCLOSURE

### Technical Problem

A method is required to accurately and efficiently provide wireless communication signals to user equipments (UEs) via airborne platforms or space.

A method for efficient coexistence of terrestrial networks and non-terrestrial networks (NTNs) is required.

The objects to be achieved with the present disclosure are not limited to what has been particularly described hereinabove and other objects not described herein will be more clearly understood by persons skilled in the art from the following detailed description.

### Technical Solution

According to an aspect, a method of receiving a downlink signal by a user equipment (UE) in a wireless communication system includes attempting to detect a synchronization signal block (SSB) on a first frequency band in which a terrestrial network (TN) cell and a non-terrestrial network (NTN) cell are supported, and performing an initial access procedure based on the detected SSB, wherein the attempting to detect the SSB is preferentially performed on a cell with a higher priority among the TN cell and the NTN cell based on priorities configured for the TN cell and the NTN cell.

Based on the TN cell having the higher priority, the attempting to detect the SSB may be performed in an order of the TN cell to the NTN cell, and based on detection of both a first SSB for the TN cell and a second SSB for the NTN cell, the initial access procedure may be performed for one cell determined among the TN cell and the NTN cell based on a first threshold configured for quality of the SSB and the priority.

Based on quality of the second SSB being higher than quality of the first SSB by the first threshold, the one cell may be determined to be the NTN cell even if the TN has a higher priority.

Based on quality of the first SSB not being lower than quality of the second SSB by the first threshold, the one cell may be determined as the TN cell with the higher priority.

Based on detection of the SSB including indication information indicating presence of a low priority cell in the SSB and a second threshold and the quality of the SSB being less than the second threshold, the UE may attempt to detect the SSB for the low priority cell among the TN cell and the NTN cell.

The priority may be configured based on at least one of a type, mobility, communication environment, or service requirement of the UE.

Based on whether the type of the UE is a massive machine type communications (mMTC) type, a vehicle to everything (V2X) type, or a narrowband Internet of things (NB-IoT) type, the NTN may be configured to a higher priority than the TN.

According to another aspect, a user equipment (UE) for receiving a downlink signal in a wireless communication system includes at least one transceiver, at least one processor, and at least one computer memory operably connectable to the at least one processor and storing instructions that, when executed, cause the at least one processor to perform operations, wherein the operations may include attempting to detect a synchronization signal block (SSB) on a first frequency band in which a terrestrial network (TN) cell and a non-terrestrial network (NTN) cell are supported, and performing an initial access procedure based on the detected SSB, and the attempting to detect the SSB may be preferentially performed on a cell with a higher priority among the TN cell and the NTN cell based on priorities configured for the TN cell and the NTN cell.

The objects are only some of the examples in the present disclosure, and various examples reflecting the technical features of the present disclosure may be derived and understood by persons skilled in the art related to the present disclosure based on the following detailed description.

### Advantageous Effects

According to some implementations of the present disclosure, a wireless communication signal may be efficiently transmitted/received via airborne platforms or space. Accordingly, the overall throughput of a wireless communication system may be increased.

According to some implementations of the present disclosure, continuity of wireless communication services may be ensured, reliability of wireless communication services may be enhanced through connectivity between various access technologies, and network resilience and reliability against disasters may be improved.

According to some implementations of the present disclosure, coexistence of non-terrestrial networks (NTNs) and terrestrial networks (NTs) may be supported.

According to some implementations of the present disclosure, a user equipment (UE) may effectively detect a synchronization signal block (SSB) even when the networks coexist on NTN and TN frequency bands.

The effects according to various embodiments are not limited to what has been particularly described hereinabove and other effects not described herein will be more clearly understood by persons skilled in the art related to the present disclosure from the following detailed description.

### BRIEF DESCRIPTION OF THE DRAWINGS

The drawings attached to this specification are intended to provide understanding of the present disclosure, illustrate various embodiments of the present disclosure, and together with the description of the specification serve to explain the principles of the present disclosure.
FIG. 1 illustrates an example of a communication system 1 to which implementations of the present disclosure are applied.
FIG. 2 is a block diagram illustrating examples of communication devices capable of performing a method according to the present disclosure.
FIG. 3 illustrates an example of a frame structure used in a 3GPP-based wireless communication system.
FIG. 4 illustrates a resource grid of a slot.
FIG. 5 illustrates a multi-beam operation in a 3GPP-based system.
FIG. 6 illustrates an example of in which SS/PBCH blocks (SSBs) are transmitted on a cell.
FIG. 7 illustrates a non-terrestrial network (NTN) structure.
FIG. 8 illustrates a synchronous raster and a channel raster used in some implementations.
FIG. 9 illustrates an SSB structure.
FIG. 10 illustrates a situation in which a terrestrial network (TN) and a non-terrestrial network (NTN) coexist.
FIG. 11 and FIG. 12 are diagrams for explaining a method of attempting to detect an SSB based on priority by a UE.
FIG. 13 is a diagram for explaining a method of configuring/determining a priority between the TN cell and the NTN cell.
FIGS. 14 to 16 are diagrams for explaining a method for a UE to perform cell search in a first frequency band in which an NTN cell and a TN cell coexist.

### DETAILED DESCRIPTION

Hereinafter, implementations according to the present disclosure will be described in detail with reference to the accompanying drawings. The detailed description, which will be given below with reference to the accompanying drawings, is intended to explain exemplary implementations of the present disclosure, rather than to show the only implementations that may be implemented according to the present disclosure. The following detailed description includes specific details in order to provide a thorough understanding of the present disclosure. However, it will be apparent to those skilled in the art that the present disclosure may be practiced without such specific details.

In some instances, known structures and devices may be omitted or may be shown in block diagram form, focusing on important features of the structures and devices, so as not to obscure the concept of the present disclosure. The same reference numbers will be used throughout the present disclosure to refer to the same or like parts.

A technique, a device, and a system described below may be applied to a variety of wireless multiple access systems.

For convenience of description, description will be given based on 3rd generation partnership project (3GPP)-based communication system. However, the technical features of the present disclosure are not limited thereto. For example, although the following detailed description is given based on 3GPP LTE or 5G technology, some implementations of the present disclosure are applicable to other arbitrary mobile communication systems and systems to be introduced in the future (e.g., 6G) except for matters that are specific to the 3GPP LTE/5G.

For terms and techniques that are not described in detail among terms and techniques used in the present disclosure, reference may be made to 3GPP based standard specifications, for example, 3GPP TS 23.304, 3GPP TS 23.285, 3GPP TS 23.287, 3GPP TS 24.587, 3GPP TS 36.211, 3GPP TS 36.212, 3GPP TS 36.213, 3GPP TS 36.300, 3GPP TS 36.321, 3GPP 36.322, 3GPP TS 36.323, 3GPP TS and 3GPP TS 36.331, 3GPP TS 37.213, 3GPP TS 38.211, 3GPP TS 38.212, 3GPP TS 38.213, 3GPP TS 38.214, 3GPP TS 38.300, 3GPP TS 38.321, 3GPP TS 38.322, 3GPP TS 38.323, 3GPP TS 38.331 etc.

In examples of the present disclosure described later, if a device "assumes" something, this may mean that a channel transmission entity transmits a channel in compliance with the corresponding "assumption". This also may mean that a channel reception entity receives or decodes the channel in the form of conforming to the "assumption" on the premise that the channel has been transmitted in compliance with the "assumption".

In the present disclosure, a user equipment (UE) may be fixed or mobile. Each of various devices that transmit and/or receive user data and/or control information by communicating with a base station (BS) may be the UE. The term UE may be referred to as terminal equipment, mobile station (MS), mobile terminal (MT), user terminal (UT), subscriber station (SS), wireless device, personal digital assistant (PDA), wireless modem, handheld device, etc. In the present disclosure, a BS refers to a fixed station that communicates with a UE and/or another BS and exchanges data and control information with a UE and another BS. The term BS may be referred to as advanced base station (ABS), Node-B (NB), evolved Node-B (eNB), gNB, base transceiver system (BTS), access point (AP), processing server (PS), etc. Particularly, a BS of a universal terrestrial radio access (UTRAN) is referred to as an NB, a BS of an evolved-UTRAN (E-UTRAN) is referred to as an eNB, and a BS of new radio access technology network is referred to as a gNB. Hereinbelow, for convenience of description, the NB, eNB, or gNB will be referred to as a BS regardless of the type or version of communication technology.

In the present disclosure, a node refers to a fixed point capable of transmitting/receiving a radio signal to/from a UE by communication with the UE. Various types of BSs may be used as nodes regardless of the names thereof. At least one antenna is installed per node. An antenna may refer to a physical antenna port or refer to a virtual antenna or an antenna group. The node may also be called a point.

A 3GPP-based communication system uses the concept of a cell in order to manage radio resources, and a cell related with the radio resources is distinguished from a cell of a geographic area. The "cell" of the geographic area may be understood as coverage within which a node may provide services using a carrier, and the "cell" of the radio resources is related with bandwidth (BW), which is a frequency range configured by the carrier. Since DL coverage, which is a range within which the node is capable of transmitting a valid signal, and UL coverage, which is a range within which the node is capable of receiving the valid signal from the UE, depend upon a carrier carrying the signal, coverage of the node may also be related with coverage of the "cell" of radio resources used by the node. Accordingly, the term "cell" may be used to indicate service coverage by the node sometimes, radio resources at other times, or a range that a signal using the radio resources may reach with valid strength at other times.

The "cell" related with the radio resources is defined by a combination of DL resources and UL resources, that is, a combination of a DL component carrier (CC) and a UL CC. The cell may be configured by the DL resources only or by the combination of the DL resources and the UL resources. If carrier aggregation is supported, linkage between a carrier frequency of the DL resources (or DL CC) and a carrier frequency of the UL resources (or UL CC) may be indicated by system information. In this case, the carrier frequency may be equal to or different from a center frequency of each cell or CC.

In a wireless communication system, the UE receives information on DL from the BS and the UE transmits information on UL to the BS. The information that the BS and UE transmit and/or receive includes data and a variety of control information and there are various physical channels according to types/usage of the information that the UE and the BS transmit and/or receive.

The 3GPP-based communication standards define DL physical channels corresponding to resource elements carrying information originating from a higher layer and DL physical signals corresponding to resource elements which are used by the physical layer but do not carry the information originating from the higher layer. For example, a physical downlink shared channel (PDSCH), a physical broadcast channel (PBCH), a physical downlink control channel (PDCCH), etc. are defined as the DL physical channels, and a reference signal (RS) and a synchronization signal (SS) are defined as the DL physical signals. The RS, which is also referred to as a pilot, represents a signal with a predefined special waveform known to both the BS and the UE. For example, a demodulation reference signal (DMRS), a channel state information RS (CSI-RS), etc. are defined as DL RSs. The 3GPP-based communication standards define UL physical channels corresponding to resource elements carrying information originating from the higher layer and UL physical signals corresponding to resource elements which are used by the physical layer but do not carry the information originating from the higher layer. For example, a physical uplink shared channel (PUSCH), a physical uplink control channel (PUCCH), and a physical random access channel (PRACH) are defined as the UL physical channels, and a DMRS for a UL control/data signal, a sounding reference signal (SRS) used for UL channel measurement, etc. are defined.

In the present disclosure, the PDCCH refers to a set of time-frequency resources (e.g., resource elements (REs)) that is a set of REs that carry downlink control information (DCI), and the PDSCH refers to a set of time-frequency resources that is a set of REs that carry DL data. The PUCCH, PUSCH, and PRACH refer to a set of time-frequency resources that is a set of time-frequency REs that carry uplink control information (UCI), UL data, and random access preambles, respectively. In the following description, the meaning of "The UE/BS transmits/receives the PUCCH/PUSCH/PRACH" is that the UE/BS transmits/receives the UCI/UL data/random access preambles on or through the PUCCH/PUSCH/PRACH, respectively. In addition, the meaning of "the BS/UE transmits/receives the PBCH/PDCCH/PDSCH" is that the BS/UE transmits/receives the broadcast information/DCI/DL data on or through a PBCH/PDCCH/PDSCH, respectively.

In the present disclosure, a radio resource (e.g., a time-frequency resource) scheduled or configured to the UE by the BS for transmission or reception of the PUCCH/PUSCH/PDSCH may be referred to as a PUCCH/PUSCH/PDSCH resource.

Since a communication device receives a physical channel and/or a physical signal in the form of radio signals on a cell, the communication device may not select and receive radio signals including only a specific physical channel or a specific physical signal through a radio frequency (RF) receiver or select and receive radio signals without a specific physical channel or a specific physical signal through the RF receiver. In actual operations, the communication device receives radio signals on the cell via the RF receiver, converts the radio signals, which are RF band signals, into baseband signals, and then decodes physical signals and/or physical channels in the baseband signals using one or more processors. Thus, in some implementations of the present disclosure, not receiving physical signals and/or physical channels may mean that a communication device does not attempt to restore the physical signals and/or physical channels from radio signals, for example, does not attempt to decode the physical signals and/or physical channels, rather than that the communication device does not actually receive the radio signals including the corresponding physical signals and/or physical channels.

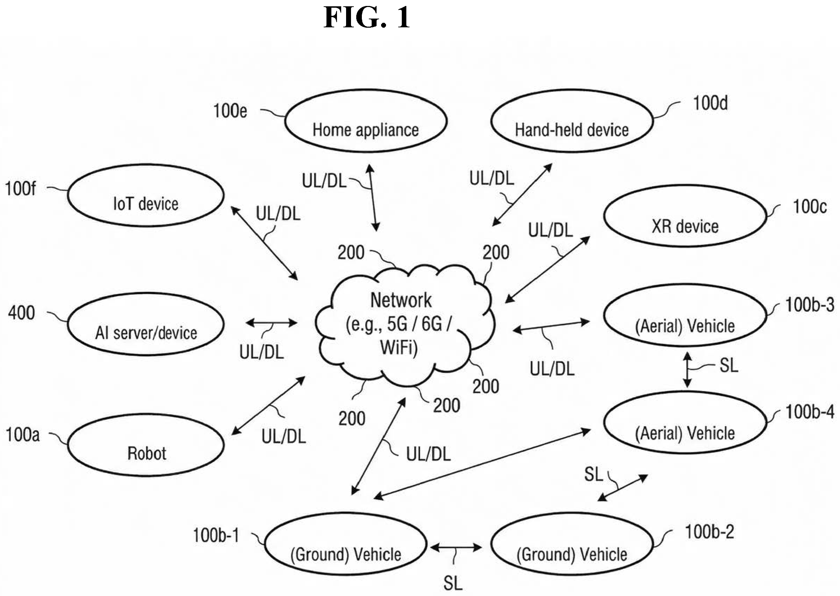

FIG. 1 illustrates an example of a communication system 1 to which implementations of the present disclosure are applied.

Referring to FIG. 1, the communication system 1 applied to the present disclosure includes wireless devices, BSs, and a network. Here, the wireless devices represent devices performing communication using wireless access technologies (e.g., 5G NR (New RAT), LTE (e.g., E-UTRA), WiFi, or 6G to be introduced in the future).

The wireless devices may include, without being limited to, a robot 100a, vehicles 100b-1, 100b-2, 100b-3, and 100b-4, an extended reality (XR) device 100c, a hand-held device 100d, a home appliance 100e, an Internet of Things (IoT) device 100f, and an artificial intelligence (AI) device/server 400. For example, the vehicles may include a ground vehicle having a wireless communication function, an autonomous driving vehicle, and a vehicle capable of performing vehicle-to-vehicle communication. Here, the vehicles may include an unmanned aerial vehicle (UAV) (e.g., a drone) and urban air mobility (UAM) (e.g., unmanned aerial vehicle). The XR device may include an augmented reality (AR)/virtual reality (VR)/mixed reality (MR) device. The hand-held device may include a smartphone, a smartpad, a wearable device (e.g., a smartwatch or smartglasses), and a computer (e.g., a notebook). The home appliance may include a TV, a refrigerator, and a washing machine. The IoT device may include a sensor and a smartmeter. For example, the BSs and the network may also be implemented as wireless devices and a specific wireless device may operate as a BS/network node with respect to another wireless device.

The wireless devices 100a to 100f may be connected to a network via BSs 200. Artificial intelligence (AI) technology may be applied to the wireless devices 100a to 100f and the wireless devices 100a to 100f may be connected to the AI server 400 via the network. Although the wireless devices 100a to 100f may communicate with each other through the BSs 200/network, the wireless devices 100a to 100f may perform direct communication (e.g., sidelink communication) with each other without passing through the BSs/network. For example, the vehicles 100b-1, 100b-2, 100b-3, and 100b-4 may perform direct communication (e.g. vehicle-to-vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connection may be established between the wireless devices 100a to 100f and the BSs 200 and between the wireless devices 100a to 100f. Here, the wireless communication/connection such as UL/DL communication and sidelink (SL) communication (or, device-to-device (D2D) communication) may be established by various wireless access technology (e.g., 5G NR). The wireless devices and the BSs/wireless devices may transmit/receive radio signals to/from each other through the wireless communication/connection (UL/DL, SL). To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

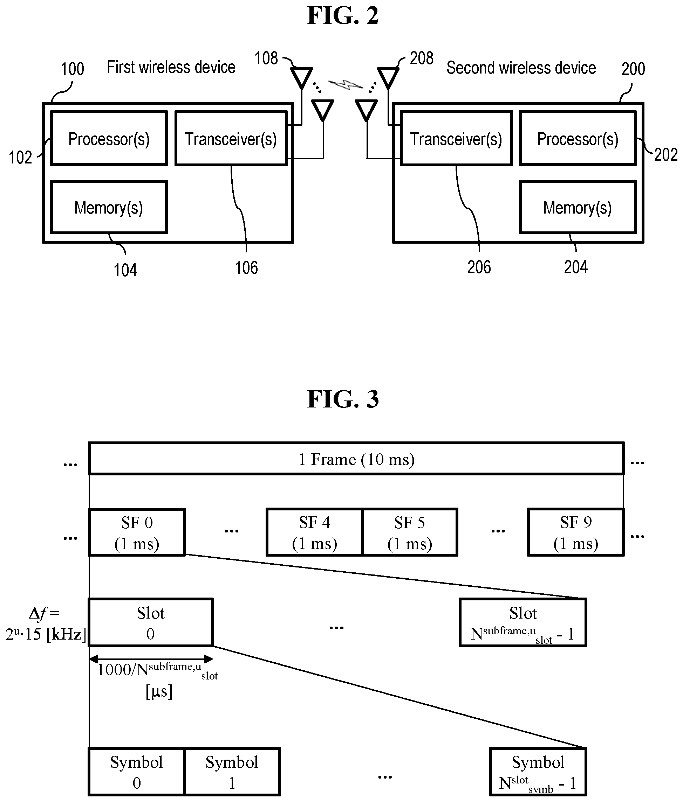

FIG. 2 is a block diagram illustrating examples of communication devices capable of performing a method according to the present disclosure. Referring to FIG. 2, a first wireless device 100 and a second wireless device 200 may transmit and/or receive radio signals through a variety of wireless access technologies. Here, {the first wireless device 100 and the second wireless device 200} may correspond to {the wireless device 100x and the BS 200} and/or {the wireless device 100x and the wireless device 100x} of FIG. 1.

The first wireless device 100 and the second wireless device 200 may include one or more processors 102 and 202 and one or more memories 104 and 204 and additionally further include one or more transceivers 106 and 206 and/or one or more antennas 108 and 208, respectively. The processors 102 and 202 may control the memories 104 and 204 and/or the transceivers 106 and 206 and may be configured to implement the after-described/proposed functions, procedures, and/or methods. For example, the processors 102 and 202 may process information within the memories 104 and 204 to generate first information/signals and then transmit radio signals including the first information/signals through the transceivers 106 and 206. The processors 102 and 202 may receive radio signals including second information/signals through the transceivers 106 and 206 and then store information obtained by processing the second information/signals in the memories 104 and 204. The memories 104 and 204 may be connected to the processors 102 and 202 and may store a variety of information related to operations of the processors 102 and 202. For example, the memories 104 and 204 may perform a part or all of processes controlled by the processors 102 and 202 or store software code including instructions for performing the after-described/proposed procedures and/or methods. Here, the processors 102 and 202 and the memories 104 and 204 may be a part of a communication modem/circuit/chip designed to implement wireless access technology. The transceivers 106 and 206 may be connected to the processors 102 and 202 and transmit and/or receive radio signals through one or more antennas 108. Each of the transceivers 106 and 206 may include a transmitter and/or a receiver.

One or more protocol layers may be implemented by, without being limited to, one or more processors 102 and 202. For example, the one or more processors 102 and 202 may implement one or more layers (e.g., functional layers such as a physical (PHY) layer, medium access control (MAC) layer, a radio link control (RLC) layer, a packet data convergence protocol (PDCP) layer, radio resource control (RRC) layer, and a service data adaptation protocol (SDAP) layer). The one or more processors 102 and 202 may generate one or more protocol data units (PDUs) and/or one or more service data units (SDUs) according to the functions, procedures, proposals, and/or methods disclosed in the present disclosure. The one or more processors 102 and 202 may generate messages, control information, data, or information according to the functions, procedures, proposals, and/or methods disclosed in the present disclosure. The one or more processors 102 and 202 may generate signals (e.g., baseband signals) including PDUs, SDUs, messages, control information, data, or information according to the functions, procedures, proposals, and/or methods disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the functions, procedures, proposals, and/or methods disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof, and the firmware or software may be configured to include the modules, procedures, or functions. Firmware or software configured to perform the functions, procedures, proposals, and/or methods disclosed in the present disclosure may be included in the one or more processors 102 and 202 or stored in the one or more memories 104 and 204 so as to be driven by the one or more processors 102 and 202. The functions, procedures, proposals, and/or methods disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, commands, and/or instructions. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit/receive user data, control information, and/or radio signals/channels, mentioned in the methods and/or operational flowcharts of the present disclosure, to/from one or more other devices. In addition, the one or more processors 102 and 202 may perform control so that the one or more transceivers 106 and 206 may transmit/receive user data, control information, or radio signals to/from one or more other devices. The one or more transceivers 106 and 206 may be connected to the one or more antennas 108 and 208. The one or more transceivers 106 and 206 may be configured to transmit and/and receive user data, control information, and/or radio signals/channels, mentioned in the functions, procedures, proposals, methods, and/or operational flowcharts disclosed in the present disclosure, through the one or more antennas 108 and 208. In the present disclosure, the one or more antennas may be a plurality of physical antennas or a plurality of logical antennas (e.g., antenna ports). The one or more transceivers 106 and 206 may convert received radio signals/channels, etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

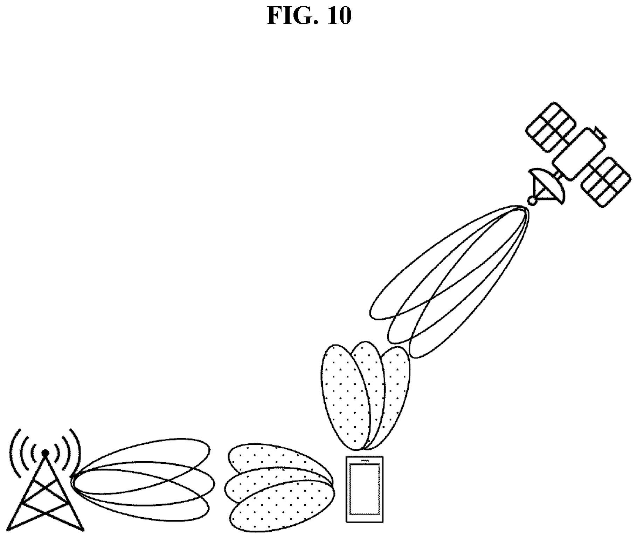

According to an example, the first wireless device 100 or a UE may include the processor 102 and the memory 104 connected to the RF transceiver 106. The memory 104 may include at least one program for performing operations related to embodiments described with reference to FIGS. 10 to 15 to be described below. In detail, the operations include an operation of attempting to detect a synchronization block (SSB) on a specific frequency band supporting a terrestrial network (TN) and a non-terrestrial network (NTN), and performing an initial access procedure based on the detected SSB, and in this case, the attempt to detect the SSB may be preferentially performed on a network cell having a higher priority among the TN cell and the NTN cell based on priorities set for the TN cell and the NTN cell.

In the present disclosure, at least one memory 104 and 204 may store instructions or programs which, when executed, cause at least one processor 102 and 202 operably coupled to the at least one memory to perform operations according to some embodiments or implementations of the present disclosure.

In the present disclosure, a computer-readable (non-transitory) storage medium may store at least one instruction or computer program which, when executed by at least one processor, causes the at least one processor to perform operations according to some embodiments or implementations of the present disclosure.

FIG. 3 illustrates an example of a frame structure used in a 3GPP-based wireless communication system.

The frame structure of FIG. 3 is purely exemplary and the number of subframes, the number of slots, and the number of symbols, in a frame, may be variously changed. In some wireless communication systems, different OFDM numerologies (e.g., subcarrier spacings (SCSs)) may be configured for multiple cells which are aggregated for one UE. Accordingly, the (absolute time) duration of a time resource including the same number of symbols (e.g., a subframe, a slot, or a transmission time interval (TTI)) may be differently configured for the aggregated cells. Here, the symbol may include an OFDM symbol (or cyclic prefix - OFDM (CP-OFDM) symbol) and an SC-FDMA symbol (or discrete Fourier transform-spread-OFDM (DFT-s-OFDM) symbol). In the present disclosure, the symbol, the OFDM-based symbol, the OFDM symbol, the CP-OFDM symbol, and the DFT-s-OFDM symbol are used interchangeably.

Referring to FIG. 3, UL and DL transmissions are organized into frames. Each frame has a duration of T_{f} = (△fₘₐₓ*N_{f}/100)*T_{c} = 10 ms, and here, a basic time unit is T_{c} = 1/(△fₘₐₓ*N_{f}), △fₘₐₓ = 480*10³ Hz, and N_{f}=4096. For reference, a sampling time is Tₛ = 1/(△f_{ref}*N_{f,ref}), △f_{ref} = 15*10³ Hz, and N_{f,ref}=2048. T_{c} and T_{f} has a relationship of a constant κ = T_{c}/T_{f} = 64. A frame includes 10 subframes, and a duration T_{sf} of a single subframe is 1 ms. Subframes are further divided into slots and the number of slots in a subframe depends on a subcarrier spacing. Each slot may include *N*^{slot}_{symb} symbols based on a cyclic prefix (CP). For example, in some scenarios, in a normal CP, each slot includes 14 OFDM symbols, and in an extended CP, each slot includes 12 OFDM symbols. The numerology depends on an exponentially scalable subcarrier spacing △f = 2^{u}*15 kHz. The table below shows the number of OFDM symbols (*N*^{slot}_{symb}) per slot, the number of slots (*N*^{frame,u}ₛₗₒₜ) per frame, and the number of slots (*N*^{subframe,u}ₛₗₒₜ) per subframes according to subcarrier spacing △f = 2^{u}*15 kHz for a normal CP.

**[Table 1]**

| *u* | *N*^{slot}_{symb} | *N*^{frame,u}ₛₗₒₜ | *N*^{subframe,u}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |
| 6 | 14 | 640 | 64 |

The table below shows the number of OFDM symbols per slot, the number of slots per frame, and the number of slots per subframe, according to the subcarrier spacing △f = 2^{u}*15 kHz.

**[Table 2]**

| *u* | *N*^{slot}_{symb} | *N*^{frame,u}ₛₗₒₜ | *N*^{subframe,u}ₛₗₒₜ |
|---|---|---|---|
| 2 | 12 | 40 | 4 |

For a subcarrier spacing configuration u, slots may be indexed within a subframe in ascending order as follows: n^{u}ₛ ∈ {0, ..., n^{subframe,u}ₛₗₒₜ - 1} and indexed within a frame in ascending order as follows: n^{u}_{s,f} ∈ {0, ..., n^{frame,u}ₛₗₒₜ - 1}.

Hereinafter, implementations of the present disclosure are described by referring to the minimum unit of time for scheduling uplink, downlink, and sidelink transmissions as a slot, but depending on a wireless communication system, the minimum unit of time for scheduling may be referred to by a different term. For example, in an LTE-based system, the minimum unit of time for scheduling transmissions is called a subframe or transmission time interval (TTI), whereas in an NR-based system, the minimum unit of time for scheduling is called a slot.

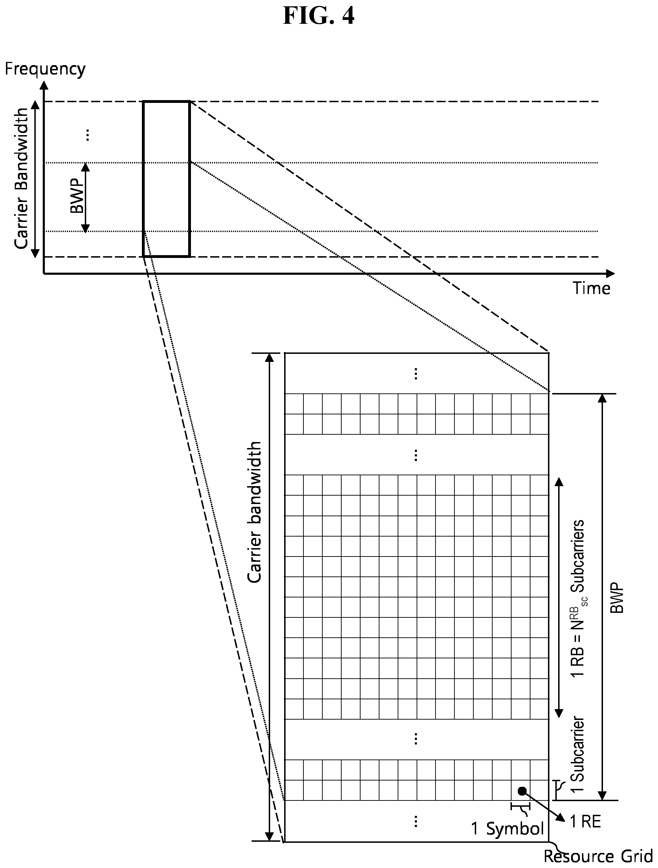

FIG. 4 illustrates a resource grid of a slot. The slot includes multiple (e.g., *N*^{slot}_{symb}) symbols in the time domain. For each numerology (e.g., subcarrier spacing) and carrier, a resource grid of *N*^{size,u}_{grid,x}**N*^{RB}_{sc} subcarriers and *N*^{subframe,u}_{symb} OFDM symbols is defined, starting at a common resource block (CRB) *N*^{start,u}_{grid} indicated by higher layer signaling (e.g., radio resource control (RRC) signaling). Here, *N*^{size,u}_{grid,x} is the number of resource blocks (RBs) in the resource grid and the subscript x is DL for downlink and UL for uplink. *N*^{RB}_{SC} is the number of subcarriers per RB, and in the 3GPP-based wireless communication system, *N*^{RB}_{SC} is typically 12. There is one resource grid for a given antenna port p, a subcarrier spacing configuration u, and a transmission link (DL or UL). The carrier bandwidth *N*^{size,u}_{grid} for the subcarrier spacing configuration u is given to the UE by a higher layer parameter (e.g. RRC parameter). Each element in the resource grid for the antenna port p and the subcarrier spacing configuration u is referred to as a resource element (RE) and one complex symbol may be mapped to each RE. Each RE in the resource grid is uniquely identified by an index *k* in the frequency domain and an index / representing a symbol location relative to a reference point in the time domain. RBs are classified into CRBs and physical resource blocks (PRBs). The CRBs are numbered from 0 upwards in the frequency domain for the subcarrier spacing configuration *u.* The center of subcarrier 0 of CRB 0 for the subcarrier spacing configuration *u is* equal to 'Point A' which serves as a common reference point for RB grids. The PRBs for subcarrier spacing configuration *u* are defined within a bandwidth part (BWP) and numbered from 0 to *N*^{size,u}_{BWP,i}-1, where i is a number of the BWP. The relation between a PRB n_{PRB} in a BWP i and a CRB n^{u}_{CRB} is given by: n^{u}_{PRB} = n^{u}_{CRB} + *N*^{start,u}_{BWP,i}, where *N*^{start,u}_{BWP,i} is a CRB in which the BWP starts relative to CRB 0. The BWP includes a plurality of contiguous RBs in the frequency domain. For example, the BWP may be a subset of contiguous CRBs defined for a given numerology uᵢ in the BWP i on a given carrier. A carrier may include a maximum of N (e.g., 5) BWPs. The UE may be configured to have one or more BWPs on a given component carrier. Data communication is performed through an activated BWP and only a predetermined number of BWPs (e.g., one BWP) among BWPs configured for the UE may be active on the corresponding carrier.

In a 3GPP-based system, a control resource set (CORESET), which is a set of time-frequency resources for which a UE is capable of monitoring a PDCCH, may be defined and/or configured. One or more CORESETs may be configured for the UE. The CORESET has a time duration of one to three OFDM symbols and includes a set of physical resource blocks (PRBs). The PRBs and the CORESET duration that make up the CORESET may be provided to the UE through upper layer (e.g., RRC) signaling. Within the configured CORESET(s), a set of PDCCH candidates is monitored according to corresponding search space sets. In the present disclosure, monitoring implies decoding (so-called blind decoding) each PDCCH candidate according to the monitored DCI formats. A master information block (MIB) on the PBCH provides the UE with parameters (e.g., CORESET#0 configuration) for monitoring the PDCCH for scheduling the PDSCH carrying a system information block 1 (SIB1). The PBCH may also indicate that there is no associated SIB1, in which case the UE may be instructed on other frequencies to search for SSBs associated with SIB1, as well as a frequency range to assume that there are no SSBs associated with SSB1. CORESET#0, which is a CORESET for scheduling at least SIB1, may be configured via MIB or dedicated RRC signaling.

A set of PDCCH candidates monitored by the UE is defined in terms of PDCCH search space sets. The search space set may be a common search space (CSS) set or a UE-specific search space (USS) set. Each CORESET configuration is associated with one or more search space sets, and each search space set is associated with one CORESET configuration.

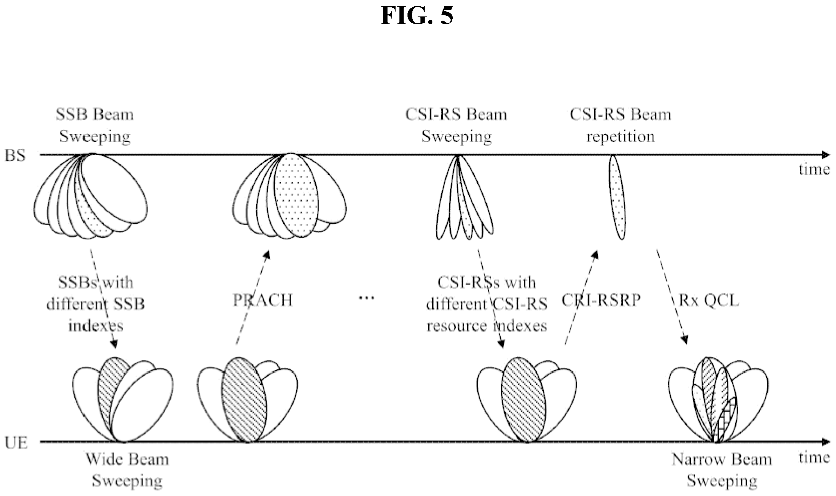

FIG. 5 illustrates a multi-beam operation in a 3GPP-based system.

5G and subsequent 3GPP-based systems may utilize a high ultra-high frequency band, such as a millimeter-frequency band equal to or greater than 6 GHz, to transmit data to multiple users while maintaining high a data rate by using a wide frequency band. However, the millimeter frequency band has frequency characteristics that cause very rapid signal attenuation over distance due to the use of an excessively high frequency band. Therefore, when a band of at least 6 GHz or higher is used, a 3GPP-based system uses a narrow beam transmission scheme that resolves a problem of coverage reduction due to rapid propagation attenuation by concentrating energy in a specific direction rather than omni-directionally and perform signal transmission to compensate for the rapid propagation attenuation characteristics. However, when a service is provided using only one narrow beam, a range in which one BS is capable of providing the service is narrowed, and thus the BS collects multiple narrow beams and provides a service by using a wide beam.

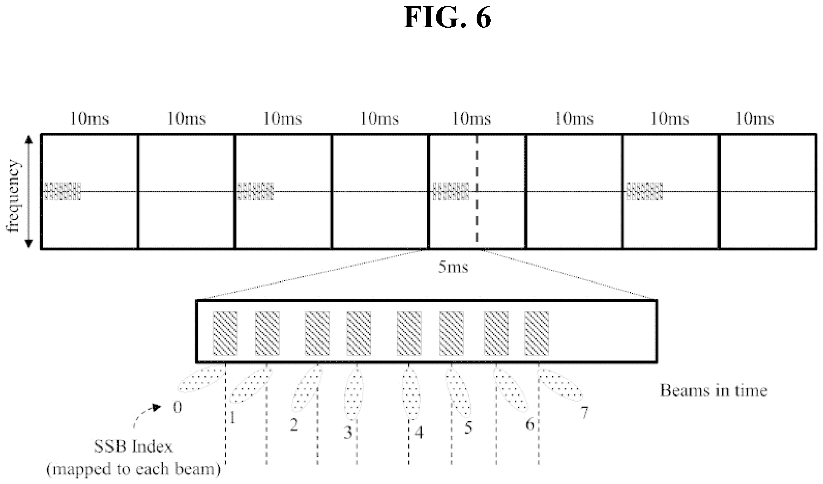

FIG. 6 illustrates an example of in which SS/PBCH blocks (SSBs) are transmitted on a cell.

In a 3GPP-based system, each SSB is associated with each beam. For example, during a half frame, different SSBs may be transmitted in different spatial directions (by using different beams that span a coverage area of a cell). Possible time positions of SSBs within a half frame are determined by a subcarrier spacing, and the periodicity of the half-frames in which SSBs are transmitted is configured by a network. Within a frequency span of a carrier, multiple SSBs may be transmitted. Different indices of SSBs transmitted/detected on a single cell may correspond to different BS (wide) Tx beams. In 3GPP-based systems, a multi-beam operation is based on beam switching/beam scanning, in which signals are transmitted/received while changing a beam direction over time. For example, assuming that the BS supports up to N transmission beams, beam sweeping may be performed to transmit a synchronous signal block (SSB) including PSS, SSS, and PBCH in each of the up to N beam directions (see SSB beam sweeping in FIG. 5). A set of SSBs within a beam-sweep is specifically called an SS burst set or an SS burst. The number of SSBs in the SS burst set represents the number of beams for the beam-sweep. Multiple SSB patterns are defined depending on a frequency band and a subcarrier spacing (SCS). In the present disclosure, the SSB pattern is also referred to as a SSB timing pattern. For a half-frame with SSBs, first (OFDM) symbol indices s for candidate SSBs may be determined according to the SCS of the SSBs as follows, where index 0 corresponds to a first symbol of a first slot in the half frame. In some scenarios, the SSB patterns according to the following table may be used.

**[Table 3]**

| SCS | OFDM symbol(s) | FR1 <= 3GHz | 3 GHz < FR1 <= 6 GHz | FR2 |
|---|---|---|---|---|
| Case A : 15 kHz SCS | {2, 8} + 14*n | n = 0, 1 | n = 0, 1, 2, 3 | |
| | | s = 2, 8, 16, 22 | s = 2, 8, 16, 22, 30, 36, 44, 50 | |
| Case B : 30 kHz SCS | {4, 8, 16, 20} + 28*n | n = 0 | n = 0, 1 | |
| | | s = 4, 8, 16, 20 | s = 4, 8, 16, 20, 32, 36, 44, 48 | |
| Case C : 30 kHz SCS | {2, 8} + 14*n | n = 0, 1 | n = 0, 1, 2, 3 | |
| | | s = 2, 8, 16, 22 | s = 2, 8, 16, 22, 30, 36, 44, 50 | |
| Case D : 120 kHz SCS | {4, 8, 16, 20} + 28*n | | | n = 0, 1, 2, 3, 5, 6, 7, 8, 10, 11, 12, 13, 15, 16, 17, 18 |
| | | | | s = 4, 8, 16, 20, 32, 36, 44, 48, 60, 64, 72, 76, 88, 92, 100, 104, 144, 148, 156, 160, 172, 176, 184, 188, 200, 204, 212, 216, 228, 232, 240, 244, 284, 288, 296, 300, 312, 316, 324, 328, 340, 344, 352, 356, 368, 372, 380, 384, 424, 428, 436, 440, 452, 456, 464, 468, 480, 484, 492, 496, 508, 512, 520, 524 |
| Case E : 240 kHz SCS | {8, 12, 16, 20, 32, 36, 40, 44} + 56*n | | | n = 0, 1, 2, 3, 5, 6, 7, 8 |
| | | | | s = 8, 12, 16, 20, 32, 36, 40, 44, 64, 68, 72, 76, 88, 92, 96, 100, 120, 124, 128, 132, 144, 148, 152, 156, 176, 180, 184, 188, 200, 204, 208, 212, 288, 292, 296, 230, 312, 316, 320, 324, 344, 348, 352, 356, 368, 372, 376, 380, 400, 404, 408, 412, 424, 428, 432, 436, 456, 460, 464, 468, 480, 484, 488, 492 |

In Table above, FR represents a frequency range, for example, FR1 may correspond to a frequency range of 410 MHz to 7,125 MHz, and FR2 may correspond to a frequency range of 24,250 MHz to 52,600 MHz. As seen from Table above, the number of SSBs within an SSB burst set may vary depending on a frequency range and an SCS. The number of candidate SSBs in a half frame may be indexed from 0 to L'ₘₐₓ-1 in ascending time order. If Lₘₐₓ is the maximum number of SSB indices within a cell or the maximum number of SSBs transmitted within a half frame, for operations without shared spectrum channel access, L'ₘₐₓ = Lₘₐₓ. For operations with shared spectrum channel access, L'ₘₐₓ and Lₘₐₓ may differ. For example, in the case of operations with shared spectrum channel access in FR1, for L'ₘₐₓ = 10 and SSBs of an SCS of 15 kHz and for L'ₘₐₓ = 20 and SSBs of an SSC of 30 kHz, Lₘₐₓ = 8 may be defined.

SSB(s) are transmitted periodically from 5 ms to 160 ms. A UE performing initial access to a network assumes 20 ms (e.g., 2 frames). In other words, for initial cell access, the UE may assume that a half frame with SSBs appears with a periodicity of two frames.

Referring back to FIG. 5, the UE may measure the power of SSB(s) received from BS transmission (Tx) beams by using a wide reception (Rx) beam and select a preferred beam of the UE. For example, the UE may select one SSB from among the detected/received SSBs. 3GPP-based systems specify a specific mapping between an SSB and a random access channel (RACH) occasion to allow the network to know which beam the UE has selected. The RACH occasion is a time and frequency resource available for transmission of the RACH preamble. Information about how many SSBs are to be mapped to one RACH occasion and how many preamble indices are to be mapped to a single SSB may be provided to the UE by the network. For example, when the network configures the number of SSBs per RACH occasion to 1/N, one SSB is associated with N RACH occasions (where N is a positive integer), and when the network configures the number of SSBs per RACH occasion to N, N preamble indices are mapped to a single SSB. The UE selects an SSB from among the SSBs detected/received by the UE on a cell, and selects the RACH occasion based on the selected SSB for transmission. The BS may detect which SSB among the SSBs transmitted on the cell the UE has selected by detecting the RACH occasion including the PRACH from the UE through BS Rx beam sweeping. The BS may determine a BS Tx beam for communication with the UE based on the SSB selected by the UE.

For finer beam tuning, CSI-RS may be transmitted. The BS may perform beam refinement by using CSI-RS transmissions in narrower beams around the BS Tx beam determined based on the RACH occasion at which the PRACH from the UE is detected (see CSI-RS beam sweeping in FIG. 5). The UE may measure the power of CSI-RSs received from the BS Tx narrow beams and report to the BS which of the BS Tx narrow beams the UE prefers. For example, the UE may measure CSI-RSs on CSI-RS resources to select at least one CSI-RS resource, and report a CSI-RS resource indicator (CRI) and a corresponding reference signal received power (RSRP) of the selected CSI-RS resource to the BS. The BS may determine a BS Tx narrow beam based on the CRI and/or corresponding RSRP reported by the UE, and repeatedly transmit the CSI-RS with the BS Tx narrow beam (see P3 CSI-RS beam sweeping in FIG. 5) such that the UE performs Rx beam sweeping to find an appropriate UE Rx beam. The UE may find the appropriate UE Rx beam by measuring the power of the CSI-RS received from each UE Rx beam.

The UE may detect beam failure by using CSI-RS/SSB. For example, when the L1-RSRP for a beam to be connected falls below a certain limit, the UE determines beam failure and searches for other candidate beams with good quality. If a predefined number of beam failures are detected, a beam failure recovery (BFR) procedure may be triggered with the candidate beam. The network may provide the UE with an identifier (ID) of an SSB transmitted by a cell, which is used to determine a candidate beam for BFR, and a preamble index used when performing the BRF to select the candidate beam identified by the SSB. The UE transmits a BRF request to a network by transmitting a PRACH associated with the SSB ID when a predetermined number of beam failures are detected, and the network provides a random access response (RAR) to the UE for the BRF request.

When receiving a PDSCH, the UE may assume that a DM-RS port of a PDSCH is quasi co-located (QCL) with the associated SSB in terms of Doppler shift, Doppler spread, average delay, delay spread, and spatial Rx parameters. A transmission configuration indicator (TCI) state may be configured/indicated for a PDCCH/PDSCH. The TCI state may include quasi co-location (QCL) information. For example, to decode a PDSCH based on a detected PDCCH with DCI for a given serving cell, the UE may be configured with M TCI-state configurations provided via upper layer parameters by the BS. Each TCI state includes parameters that configure a QCL relationship between one or two downlink reference signals (DL RSs) and DM-RS ports of a PDSCH, DM-RS ports of a PDCCH, or CSI-RS port(s) of a CSI-RS resource. The QCL relationship is configured by an upper layer parameter qcl-type1 for the first DL RS and an upper layer parameter qcl-type2 for the second DL RS (if configured). The QCL types corresponding to each DL RS are given by the upper-level parameter qcl-type in QCL-Info and may take one of the following values.
- 'typeA' : {Doppler shift, Doppler spread, average delay, delay spread}
- 'typeB' : {Doppler shift, Doppler spread}
- 'typeC' : {Doppler shift, average delay}
- 'typeD' : {Spatial Rx parameter}

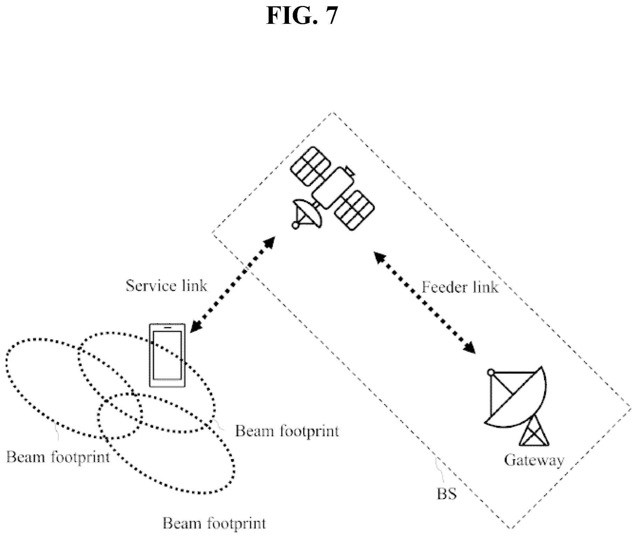

FIG. 7 illustrates a non-terrestrial network (NTN) structure.

Recently, discussions have been underway to enable 3GPP-based systems to support non-terrestrial networks (NTNs). The NTN is any network including non-ground flying objects. When wireless communication via the NTN becomes possible in 3GPP-based systems, the continuity of wireless communication services may be ensured, the reliability of wireless communication services may be strengthened through connectivity between various access technologies, and network resilience and reliability against disasters may be improved. For convenience of explanation, the following terms are used below.
- NTN: A radio access network including BSs that provides non-terrestrial radio access to UEs by using NTN payloads and NTN gateways mounted on airborne or space-borne NTN vehicles.
- NTN Gateway: An earth station located on the surface of the Earth that provides connectivity to NTN payloads by using feeder links. The NTN gateway is a transport network layer (TNL) node.
- NTN Payload: A network node mounted on a satellite or high altitude platform station that provides connectivity functions between service links and feeder links.
- Service Link: Wireless link between NTN payload and UE.
- Feeder link: A wireless link between the NTN gateway and the NTN payload.
- Satellite: A space-borne vehicle orbiting the Earth carrying an NTN payload.
- NTN cell: A cell that provides a service link between the UE and the NTN payload.

Referring to FIG. 7, the NTN gateway is connected to an NTN payload mounted on a satellite or high altitude platform system (HAPS) via a feeder link. The NTN payload is connected to the UE via a service link. The NTN gateway may be connected to a core network of a 3GPP-based system.

The NTN payload forwards a wireless protocol received from the UE (via the service link) to the NTN gateway (via the feeder link), and forwards a wireless protocol received from the NTN gateway (via the feeder link) to the UE (via the feeder link). The NTN gateway may serve multiple NTN payloads, and the NTN payload may be served by multiple NTN gateways. For the NTN, a tracking area may correspond to a fixed geographical area, and each mapping may be configured in a wireless access network.

The following three types of service links are supported:
- Earth-fixed service link: A service link that is provided by beam(s) that continuously cover the same geographical areas (e.g., in the case of GSO satellites).
- Quasi-Earth-fixed service link: A service link supplied by beam(s) that cover one geographical area for a limited period and another geographical area for another period (e.g., in the case of NGSOs that produce steerable beams).
- Earth-moving service link: A service link of which a coverage area is supplied by beam(s) that glide over the Earth surface (e.g., for NGSO satellites that produce fixed or non-steerable beams).

The NTN may include a satellite communication network, an air-to-ground network, and a UAV network. One of the key concepts in the NTN is that NTN cells are provided by non-geostationary orbit (NGSO) satellites that periodically orbit the Earth. Each satellite has its own orbit, which is included in satellite position estimate information. Based on the satellite position estimate information, a network may predict feeder link switchover and manage UE mobility and radio resource control. A BS providing NTN access may broadcast orbital trajectory information or ephemeris information regarding coordinates for the NTN payload. EphemerisInfo may provide satellite position estimate in the format of position and velocity state vectors or in the format of orbital parameters. Tables below illustrate EphemerisInfo information elements (IEs) broadcast by a BS and descriptions of fields of EphemerisInfo IEs.

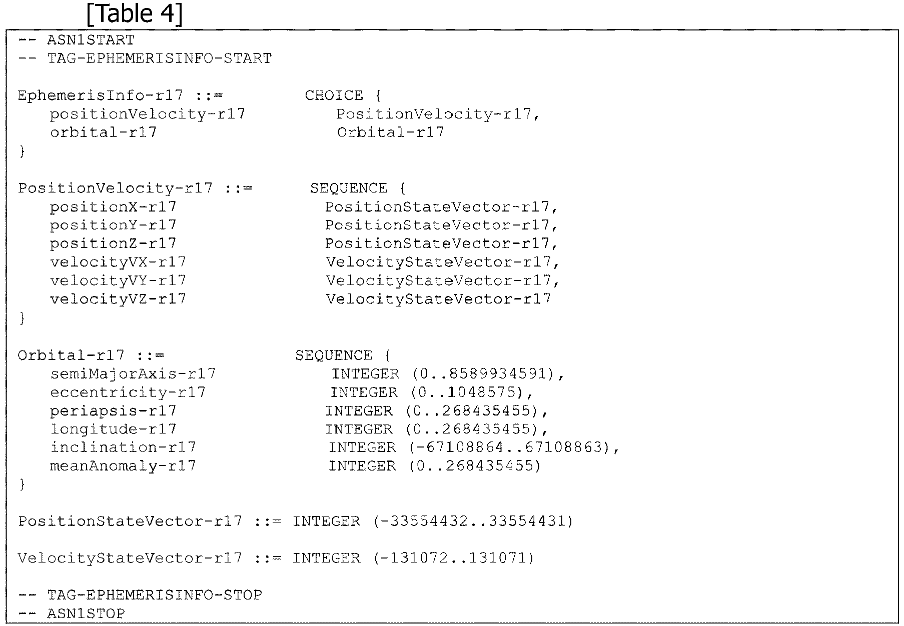

**[Table 5]**

| ***Ephemerisinfo* field descriptions** |
|---|
| ***eccentricity*** |
| Satellite orbital parameter: eccentricity e, see NIMA TR 8350.2 [71]. Unit is radian. |
| Step of 1.431 * 10⁻⁸. Actual value = field value * (1.431 * 10⁻⁸). |
| ***inclination*** |
| Satellite orbital parameter: inclination i, see NIMA TR 8350.2 [71]. Unit is radian. |
| Step of 2.341* 10⁻⁸ rad. Actual value = field value * (2.341* 10⁻⁸). |
| ***longitude*** |
| Satellite orbital parameter: longitude of ascending node Ω, see NIMA TR 8350.2 [71]. Unit is radian. |
| Step of 2.341* 10⁻⁸ rad. Actual value = field value * (2.341* 10⁻⁸). |
| ***meanAnomaly*** |
| Satellite orbital parameter: Mean anomaly M at epoch time, see NIMA TR 8350.2 [71]. Unit is radian. |
| Step of 2.341* 10⁻⁸ rad. Actual value = field value * (2.341* 10⁻⁸). |
| ***ZZperiapsis*** |
| Satellite orbital parameter: argument of periapsis ω, see NIMA TR 8350.2 [71]. Unit is radian. |
| Step of 2.341* 10⁻⁸ rad. Actual value = field value * (2.341* 10⁻⁸). |
| ***positionX, positionY**, **positionZ*** |
| X, Y, Z coordinate of satellite position state vector in ECEF. Unit is meter. |
| Step of 1.3 m. Actual value = field value * 1.3. |
| ***semiMajorAxis*** |
| Satellite orbital parameter: semi major axis α, see NIMA TR 8350.2 [71]. Unit is meter. |
| Step of 4.249 * 10⁻³ m. Actual value = 6500000 + field value * (4.249 * 10⁻³). |
| ***velocityVX, velocityVY, velocityVZ*** |
| X, Y, Z coordinate of satellite velocity state vector in ECEF. Unit is meter/second. |
| Step of 0.06 m/s. Actual value = field value * 0.06. |

Satellite communication networks may include low Earth orbit (LEO) satellites, medium Earth orbit (MEO) satellites, and geosynchronous Earth orbit (GEO) satellites.

**[Table 6]**

| **Platforms** | **Altitude range** | **Orbit** | **Typical beam footprint size** |
|---|---|---|---|
| Low-Earth Orbit (LEO) | 300 - 1500 km | Circular around the earth | 100 - 1000 km |
| Medium-Earth Orbit (MEO) | 7000 - 25000 km | | 100 - 1000 km |
| Geostationary Earth Orbit (GEO) | 35786 km | National station keeping position fixed | 200 - 2500 km |

The following are examples of NTN deployment scenarios.

**[Table 7]**

| **Main attributes** | **Deployment-D1** | **Deployment-D2** | **Deployment-D3** | **Deployment-D4** | **Deployment-D5** |
|---|---|---|---|---|---|
| Platform orbit and altitude | GEO at 35 786 km | GEO at 35 786 km | Non-GEO down to 600 km | Non-GEO down to 600 km | UAS between 8 km and 50 km including HAPS |
| Carrier Frequency on the link between Air / space-borne platform and UE | Around 20 GHz for DL Around 30 GHz for UL (Ka band) | Around 2 GHz for both DL and UL (S band) | Around 2 GHz for both DL and UL (S band) | Around 20 GHz for DL Around 30 GHz for UL (Ka band) | Below and above 6 GHz |
| Beam pattern | Earth fixed beams | Earth fixed beams | Moving beams | Earth fixed beams | Earth fixed beams |

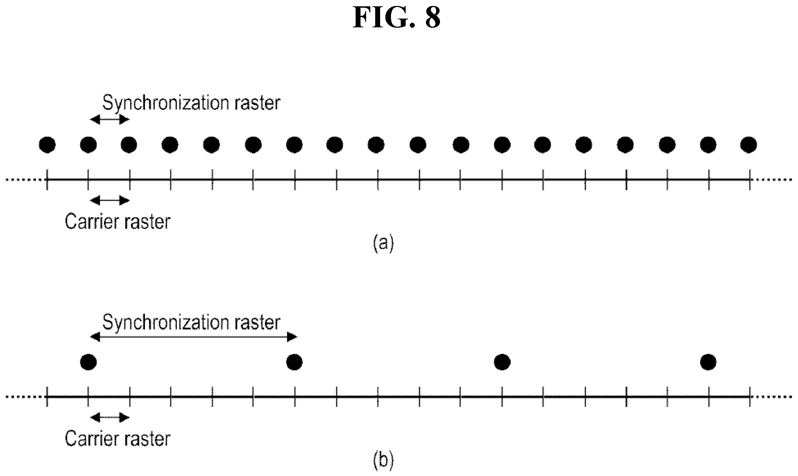

FIG. 8 illustrates a synchronous raster and a channel raster used in some implementations.

A UE attempting network access performs cell search, which is a process for the UE to obtain time and frequency synchronization with a cell and to detect a physical layer cell identity (PCI) of the cell. During cell search operations performed when powered on, the UE obtains necessary information required to access the cell by using an SSB. A UE performing cell search attempts to detect SSBs while moving through the frequency domain assuming a synchronization raster. The synchronization raster indicates possible frequency locations of SSBs to be used by the UE for obtaining system information when there is no explicit signaling of SSB locations. In LTE, the frequency domain location of PSS/SSS is always fixed around the carrier center frequency (see (a) of FIG. 8). In contrast, in NR, a set of possible frequency locations for an SSB is defined based on a frequency band, called the synchronization raster, and the UE needs to search for an SSB based on the synchronization raster. Unlike in LTE in which a UE searches for PSS/SSS at all carrier raster locations, in a UE in NR, a sparser synchronization raster is defined (see (b) of FIG. 8). Therefore, in NR, the UE needs to search for an SSB in a sparser synchronization raster than LTE. The carrier raster is also called a channel raster, and the channel raster represents possible carrier positions. The global frequency channel raster defines a set of radio frequency (RF) frequencies F_{REF}. The RF reference frequencies are used in signaling to identify the locations of RF channels, SSB blocks, and other elements. A global frequency raster is used to define all frequencies from 0 to 100 GHz. In NR, RF reference frequencies may be given by an NR absolute radio frequency channel number (NR-ARFCN) and the RF reference frequency F_{REF} in MHz may be given by the following equation: F_{REF} = F_{REF-Offs} + △F_{Global}(N_{REF} - N_{REF-Offs}), where △F_{Global} is the granularity of the frequency raster, N_{REF} is NR-ARFCN, and F_{REF-Offs} and N_{REF-Offs} may be given by Table below.

**[Table 8]**

| **Frequency range (MHz)** | **ΔF_{Global} (kHz)** | **F_{REF-Offs} (MHz)** | **N_{REF-Offs}** | **Range of N_{REF}** |
|---|---|---|---|---|
| 0 - 3000 | 5 | 0 | 0 | 0 - 599999 |
| 3000 - 24250 | 15 | 3000 | 600000 | 600000 - 2016666 |

A channel raster defines a subset of RF reference frequencies that are to be used to identify RF channel locations in uplink and downlink.

A global synchronization raster is defined for all frequencies, and the frequency location of an SSB is defined as SS_{REF} with a corresponding number global synchronization signal number (GSCN). Parameters defining the SS_{REF} and GSCN for all frequency ranges are defined, for example, in Table below.

**[Table 9]**

| **Frequency range** | **SS Block frequency position SS_{REF}** | **GSCN** | **Range of GSCN** |
|---|---|---|---|
| 0 - 3000 MHz | N * 1200kHz + M * 50 kHz, N=1:2499, M ∈ {1,3,5} (Note 1) | 3N + (M-3)/2 | 2 - 7498 |
| 3000 - 24250 MHz | 3000 MHz + N * 1.44 MHz N = 0:14756 | 7499 + N | 7499 - 22255 |
| NOTE 1: The default value for operating bands with which only support SCS spaced channel raster(s) is M=3. | | | |

A synchronization raster for each band may be given, for example, by Table below. A distance between applicable GSCN entries may be given by <Step size> indicated in Table below.

**[Table 10]**

| **NR operating band** | **SS Block SCS** | **SS Block pattern^{NOTE 1}** | **Range of GSCN (First - <Step size> - Last)** |
|---|---|---|---|
| n1 | 15 kHz | Case A | 5279 - <1> - 5419 |
| n2 | 15 kHz | Case A | **4829** - <1> - 4969 |
| n3 | 15 kHz | Case A | 4517 - <1> - 4693 |
| n5 | 15 kHz | Case A | 2177 - <1> - 2230 |
| | 30 kHz | Case B | 2183 - <1> - 2224 |
| n7 | 15 kHz | Case A | 6554 - <1> - 6718 |
| n8 | 15 kHz | Case A | 2318 - <1> - 2395 |
| n12 | 15 kHz | Case A | 1828 - <1> - 1858 |
| n14 | 15 kHz | Case A | 1901 - <1> - 1915 |
| n18 | 15 kHz | Case A | 2156 - <1> - 2182 |
| n20 | 15 kHz | Case A | 1982 - <1> - 2047 |
| n25 | 15 kHz | Case A | 4829 - <1> - 4981 |
| n26 | 15 kHz | Case A | 2153 - <1> - 2230 |
| n28 | 15 kHz | Case A | 1901 - <1> - 2002 |
| n29 | 15 kHz | Case A | 1798 - <1> - 1813 |
| n30 | 15 kHz | Case A | 5879 - <1> - 5893 |
| n34 | 15 kHz | Case A | NOTE 5 |
| | 30 kHz | Case C | 5036 - <1> - 5050 |
| n38 | 15 kHz | Case A | NOTE 2 |
| | 30 kHz | Case C | 6437 - <1> - 6538 |
| n39 | 15 kHz | Case A | NOTE 6 |
| | 30 kHz | Case C | 4712 - <1> - 4789 |
| n40 | 30 kHz | Case C | 5762 - <1> - 5989 |
| n41 | 15 kHz | Case A | 6246 - <3> - 6717 |
| | 30 kHz | Case C | 6252 - <3> - 6714 |
| n46^{NOTE 3} | 30 kHz | Case C | 8993 - <1> - 9530 |
| n48 | 30 kHz | Case C | 7884 - <1> - 7982 |
| n50 | 30 kHz | Case C | 3590 - <1> - 3781 |
| n51 | 15 kHz | Case A | 3572 - <1> - 3574 |
| n53 | 15 kHz | Case A | 6215 - <1> - 6232 |
| n65 | 15 kHz | Case A | 5279 - <1> - 5494 |
| n66 | 15 kHz | Case A | 5279 - <1> - 5494 |
| | 30 kHz | Case B | 5285 - <1> - 5488 |
| n70 | 15 kHz | Case A | 4993 - <1> - 5044 |
| n71 | 15 kHz | Case A | 1547 - <1> - 1624 |
| n74 | 15 kHz | Case A | 3692 - <1> - 3790 |
| n75 | 15 kHz | Case A | 3584 - <1> - 3787 |
| n76 | 15 kHz | Case A | 3572 - <1> - 3574 |
| n77 | 30 kHz | Case C | 7711 - <1> - 8329 |
| n78 | 30 kHz | Case C | 7711 - <1> - 8051 |
| n79 | 30 kHz | Case C | 8480 - <16> - 8880 |
| n90 | 15 kHz | Case A | 6246 - <1> - 6717 |
| | 30 kHz | Case C | 6252 - <1> - 6714 |
| n91 | 15 kHz | Case A | 3572 - <1> - 3574 |
| n92 | 15 kHz | Case A | 3584 - <1> - 3787 |
| n93 | 15 kHz | Case A | 3572 - <1> - 3574 |
| n94 | 15 kHz | Case A | 3584 - <1> - 3787 |
| n96^{NOTE 4} | 30 kHz | Case C | 9531 - <1> - 10363 |

The notes shown in Table 10 may be explained by Table below.

**[Table 11]**

| | |
|---|---|
| NOTE 1: | SSB pattern is defined in clause in 3GPP TS 38.213. |
| NOTE 2: | The applicable SS raster entries are GSCN = {6432, 6443, 6457, 6468, 6479, 6493, 6507, 6518, 6532, 6543}. |
| NOTE 3: | The following GSCN are allowed for operation in band n46: GSCN = {8996, 9010, 9024, 9038, 9051, 9065, 9079, 9093, 9107, 9121, 9218, 9232, 9246, 9260, 9274, 9288, 9301, 9315, 9329, 9343, 9357, 9371, 9385, 9402, 9416, 9430, 9444, 9458, 9472, 9485, 9499, 9513}. |
| NOTE 4: | The following GSCN are allowed for operation in band n96: GSCN = {9548, 9562, 9576, 9590, 9603, 9617,9631, 9645, 9659, 9673, 9687, 9701, 9714, 9728, 9742, 9756, 9770, 9784, 9798, 9812, 9826, 9840, 9853, 9867, 9881, 9895, 9909, 9923, 9937, 9951, 9964, 9978, 9992, 10006, 10020, 10034, 10048, 10062, 10076, 10090, 10103, 10117, 10131, 10145, 10159, 10173, 10187, 10201, 10214, 10228, 10242, 10256, 10270, 10284, 10298, 10312, 10325, 10339, 10353}. |
| NOTE 5: | The applicable SS raster entries are GSCN = {5032, 5043, 5054} |
| NOTE 6: | The applicable SS raster entries are GSCN = {4707, 4715, 4718, 4729, 4732, 4743, 4747, 4754, 4761, 4768, 4772, 4782, 4786, 4793} |

Referring to Table 9 and Table 10, for n35, the UE may perform cell search by incrementing GSCN by 1 starting from GSCN = 6125.

Cell selection is performed based on cell defining SSBs (CD-SSBs) in which a synchronization raster is located. When an SSB is associated with remaining minimum system information (RMSI) (e.g., SIB1), for example, when the MIB carried by the PBCH in the SSB includes parameters for transmission of a PDCCH that schedules the RMSI, the SSB is called a CD-SSB. The UE may search for frequency bands, identify the strongest cell based on an SSB for each carrier frequency, and select the cell to perform initial access.

### SSB related operation

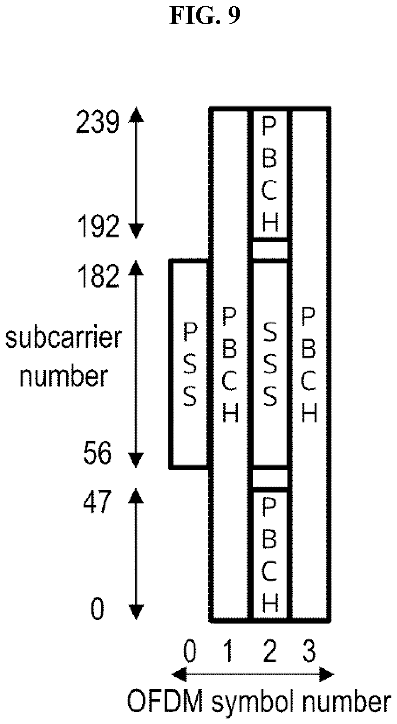

FIG. 9 illustrates an SSB structure. A UE may perform cell search, system information obtaining, beam alignment for initial access, DL measurement, and the like based on an SSB. The SSB is used interchangeably with a synchronization signal/physical broadcast channel (SS/PBCH) block.

Referring to FIG. 9, an SSB includes PSS, SSS, and PBCH. The SSB includes four consecutive OFDM symbols, and PSS, PBCH, SSS/PBCH, and PBCH are transmitted for each OFDM symbol. The PSS and the SSS each include 1 OFDM symbol and 127 subcarriers, and the PBCH includes 3 OFDM symbols and 576 subcarriers. Polar coding and quadrature phase shift keying (QPSK) are applied to the PBCH. The PBCH includes data RE and demodulation reference signal (DMRS) RE for each OFDM symbol. There are three DMRS REs per RB and three data REs between the DMRS REs.

Cell search refers to a process by which a UE obtains time/frequency synchronization of a cell and detects a cell identifier (ID) of the cell (e.g., physical layer Cell ID or PCID). The PSS is used to detect a cell ID within a cell ID group, and the SSS is used to detect a cell ID group. The PBCH is used to detect an SSB (time) index and detect a half frame.

The cell search process of the UE may be summarized as shown in Table 12 below.

**[Table 12]**

| | Signal type | Operations |
|---|---|---|
| 1^{st} step | PSS | * Obtain SS/PBCH block (SSB) symbol timing |
| | | * Detect cell ID within cell group ID (3 hypothesis) |
| 2^{nd} Step | SSS | * Detect cell group ID (336 hypothesis) |
| 3^{rd} Step | PBCH DMRS | * SSB index and Half frame (HF) index(Slot and frame boundary detection) |
| 4^{th} Step | PBCH | * Time information (80 ms, System Frame Number (SFN), SSB Index, HF)* Minimum Remaining System Information (RMSI) Control Resource Set (CORESET)/Search Space Configuration |
| 5^{th} Step | PDCCH and PDSCH | * Cell access information* RACH configuration |

There are 336 cell ID groups and 3 cell IDs for each cell ID group. There are a total of 1008 cell IDs. Information about a cell ID group to which a cell ID of a cell belongs is provided/obtained through an SSS of the cell, and information about a cell ID among 336 cells within the cell ID is provided/obtained through a PSS.

FIG. 10 illustrates a situation in which a terrestrial network (TN) and a non-terrestrial network (NTN) coexist.

Referring to FIG. 10, when a UE is served by a BS of the TN, a UE reception (RX) beam may be directed toward the ground, and when the UE is served by the BS of the NTN, the UE RX beam may be directed toward the sky. For a frequency band in which the NTN and the TN may coexist, the UE does not have any prior information about BS types during initial access. In this case, during initial access, the UE may not know whether its RX beam for SSB reception needs to be formed toward the TN-BS or the NTN-BS, and thus the UE may randomly select the RX beam direction. When the randomly selected RX beam direction is not appropriate, cell search may take more time, which may result in performance degradation. Therefore, NTN/TN differentiation technology is required for coexistence of the NTN and the TN. Hereinafter, a method of performing cell search and/or connection based on priorities between the NTN and the TN is described in detail as an NTN/TN differentiation technology.

### Priority-based NTN/TN cell search

A UE may detect/search for SSB based on a synchronization raster to perform cell search for cell selection (or reselection). The UE may measure power of the detected SSBs, select a specific SSB from among the detected SSBs based on the measured power, and perform an initial access procedure for cell access based on the specific SSB.

The UE may perform the cell search for an operating band in which the NTN and the TN coexist as described above. In this case, it may be unclear for the UE to attempt to detect an SSB for either the cell for the NTN or the cell for the TN in the cell search.

Hereinafter, for convenience of explanation, the cell for the NTN is defined as an NTN cell, the cell for the TN is defined as a TN cell, and either the cell for the NTN or the cell for the TN is defined as a network cell. With respect to priority-based cell search, a description will be given assuming that the priority is applied to perform cell search between the TN cell and the NTN cell in the same synchronous raster, even without a separate definition.

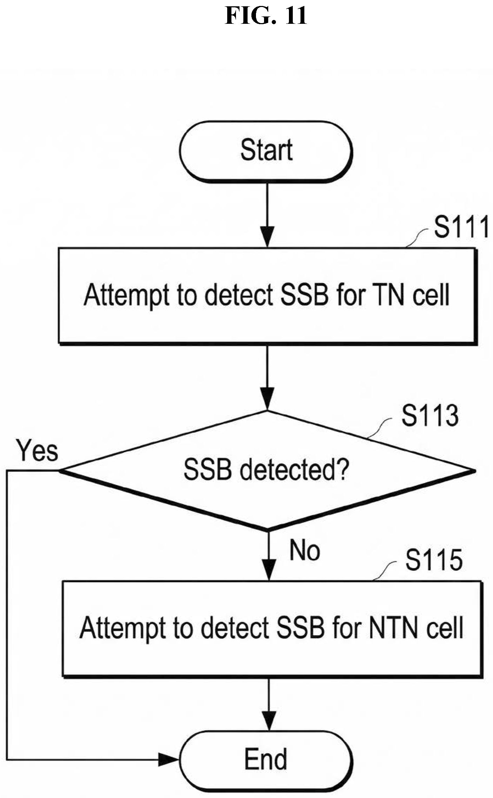

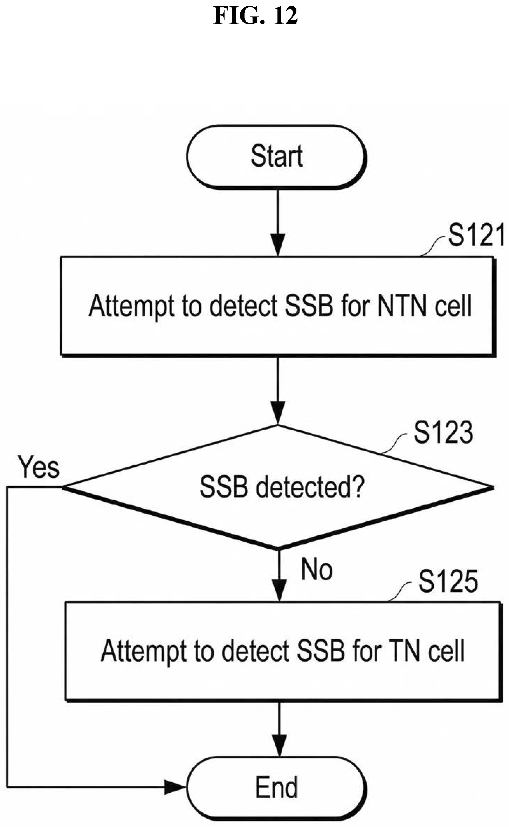

FIG. 11 and FIG. 12 are diagrams for explaining a method of attempting to detect an SSB based on priority by a UE.

As described above, the UE may attempt to detect the SSB for cell selection/search for a frequency band (or, first frequency band) in which an NTN cell and a TN cell coexist. In this case, the UE may perform cell selection/search for the NTN cell and the TN cell based on priority. Here, the priority between the TN cell and NTN cell may be preconfigured/predefined. The UE may perform cell search from a cell with a higher priority to a cell with a lower priority among the TN cell and NTN cell based on the priority. For example, when the TN cell is configured as a network cell with a higher priority than the NTN cell, the UE may attempt to detect an SSB for the NTN cell after attempting to detect an SSB for the TN cell.

Hereinafter, a case in which detection of the SSB is attempted when the priority of the TN cell is higher than that of the NTN cell will be described in detail with reference to FIG. 11, and a case in which detection of the SSB is attempted when the priority of the NTN cell is higher than that of the TN cell will be described in detail with reference to FIG. 12.

Referring to FIG. 11, the UE may attempt to preferentially detect an SSB that is expected/assumed to be associated with the TN cell, which is a high priority network cell (S111). For example, the UE may prioritize detection of the SSB for the TN cell over the NTN cell by attempting to detect SSB by using reception beams beamformed in a terrestrial direction (in which the TN cell may be located).

Then, the UE may terminate cell search based on detection of the SSB when the SSB for the TN cell is detected (Yes in S113). In this case, the UE may obtain time and frequency synchronization for the TN cell based on the SSB and perform an initial access procedure for the TN cell.

The UE may obtain a PBCH including a master information block (MIB) from the detected SSB, and may confirm or identify whether the SSB is for the TN cell or the NTN cell based on information about the cell obtained from the MIB.

Alternatively, the UE may (re)attempt to detect an SSB that may be assumed/expected to be for an NTN cell with a lower priority (S115) when an SSB for the TN cell with a higher priority is not detected (No in S113). For example, when detection of the SSB for the TN cell fails, the UE may reattempt detection of the SSB for the NTN cell with a lower priority. For example, when detection of SSB by using the reception beam beamformed in the terrestrial direction (in which the TN cell may be located) fails, the UE may (re)attempt detection of the SSB by changing the direction of the reception beams toward the sky (in which the NTN cells may be located) to perform cell search for the NTN cell.

For example, the UE may attempt to detect an SSB for a high priority TN cell for a given synchronization raster k. When detection of the SSB for the TN cell fails for the synchronization raster k, the UE may reattempt detection of the SSB for the NTN cell for the synchronization raster k for which detection of the SSB for the TN cell fails.

When the UE successfully detects the SSB for the TN cell, the UE may perform an initial access procedure for the TN cell based on the successfully detected SSB. Alternatively, the UE may perform an initial access procedure for the NTN cell when detection of the SSB for the TN cell fails and detection of the SSB for the NTN cell is successful in an attempt to detect the SSB for the NTN cell.

Referring to FIG. 12, the UE may attempt to preferentially detect an SSB that is expected/assumed to be associated with the NTN cell, which is a high priority network cell (S121). For example, the UE may attempt to detect an SSB by using reception beams beamformed toward the sky (in which NTN cells may be located) to prioritize cell search for the NTN cell. The UE may preferentially perform cell search for the NTN cell by using the reception beams for the sky direction.

Then, the UE may terminate cell search when the SSB for the NTN cell is detected (Yes in S123). In this case, the UE may obtain time and frequency synchronization for the NTN cell based on the SSB and perform an initial access procedure for the NTN cell.

Alternatively, the UE may (re)attempt to detect an SSB that may be assumed/expected to be for a TN cell with a lower priority (S125) when an SSB for the NTN cell with a higher priority is not detected (No in S123). For example, when detection of the SSB for the NTN cell fails, the UE may reattempt detection of the SSB for the TN cell with a lower priority. For example, when detection of an SSB by using the the reception beams beamformed in the sky direction (in which the NTN cell may be located) fails, the UE may change the reception beam to reception beams beamformed in the terrestrial direction and reattempt detection of the SSB. When an SSB is detected using the reception beams beamformed in the terrestrial direction, the UE may assume/expect the detected SSB to be the SSB for the TN cell.

For example, the UE may attempt to detect an SSB for a high priority NTN cell for a given synchronization raster k. When detection of the SSB for the NTN cell fails for the synchronization raster k, the UE may reattempt detection of the SSB for the TN cell for the synchronization raster k for which detection of the SSB for the TN cell fails.

Hereinafter, a method of configuring/determining a priority between the TN cell and the NTN cell is described in detail.

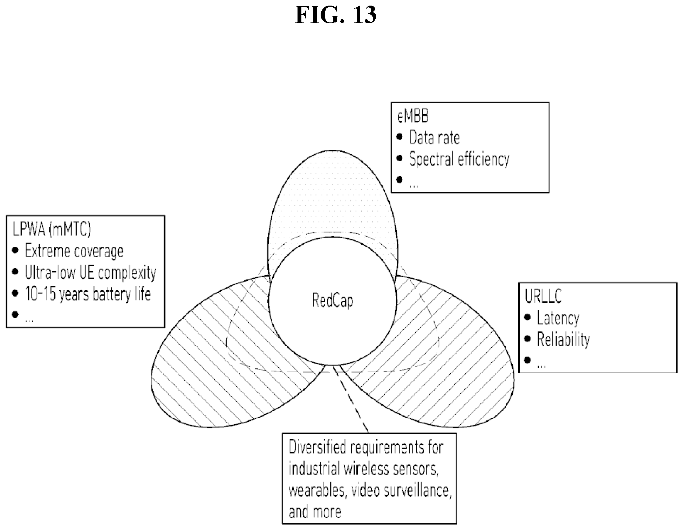

FIG. 13 is a diagram for explaining a method of configuring/determining a priority between the TN cell and the NTN cell.

The priority between the above-described TN cell and the NTN cell described above may be determined/configured based on at least one of Alt 1-1, Alt 1-2, Alt 1-3, or Alt 1-4 below.

### (1) Alt 1-1

The priority may be configured such that a TN cell always has a priority over the NTN cell. In this case, the UE may always preferentially perform detection of the SSB for the TN cell, and when the SSB for the TN cell is detected, the UE may perform an initial access procedure based on the detected SSB. Alternatively, when detection of the SSB for the TN cell fails, the UE may (re)attempt detection of the SSB for the NTN cell.

### (2) Alt 1-2

The priority may be configured such that an NTN cell always has a priority over the TN cell. In this case, the UE may always preferentially perform detection of the SSB for the NTN cell, and when the SSB for the NTN cell is detected, the UE may perform an initial access procedure on the NTN cell based on the detected SSB. Alternatively, when detection of the SSB for the NTN cell fails, the UE may (re)attempt detection of the SSB for the TN cell.

### (2) Alt 1-3

The priority may be configured/determined based on the various UE types (or communication types), applications and/or requirements.

For example, as illustrated in FIG. 13, the UE may support a low power wide area (LPWA) or reduced capability (RedCAP) type in which power (transmission/reception power) is limited, an ultra-reliable low-latency communications (URLLC) type requiring sensitive delay requirements, a massive machine type communications (mMTC) or Internet of things (IoT) (or narrowband-IoT) type requiring massive connectivity, and/or a vehicle-to-everything (V2X) type with high mobility (e.g., communication between vehicles capable of traveling at high speeds, or communication within a train). In this case, the network (or the UE directly) may configure/determine a priority between the NTN and the TN based on each type, requirements of each type, applications, and the like.

For example, for a UE of a power-limited UE type or communication type such as LPWA or RedCap, the priority may be determined/configured such that the TN cell takes precedence over the NTN cell. Alternatively, for a UE of a URLLC UE type or communication type that requires sensitive delay requirements, the priority may be determined/configured such that the TN cell takes precedence over the NTN cell.

Alternatively, for the UE that is an mMTC or IoT type requiring massive connectivity, the priority may be determined/configured such that the NTN cell takes precedence over the TN cell. Alternatively, the priority may be configured/determined such that the NTN cell has priority over the TN cell for a V2X type UE with high mobility.

### (4) Alt 1-4

Alternatively, the UE may directly determine/configure the priority between the NTN cell and the TN cell based on a surrounding environment or a surrounding communication environment. For example, the UE may configure/determine the priority such that the TN cell has priority over the NTN cell when the surrounding environment or surrounding communication environment is an urban environment. Alternatively, the UE may configure/determine the priority such that the NTN cell has priority over the TN cell when the surrounding environment or surrounding communication environment is a rural environment. For example, the UE may determine whether a location thereof is an urban or rural environment through a GPS or the like.

Alternatively, when the UE is determined to be located on a highway based on GPS/zone ID/movement speed, and the like, the priority may be configured such that the NTN cell has priority over the TN cell. Alternatively, the UE may configure the priority such that the NTN cell has priority over the TN cell when a movement speed of the UE is equal to or greater than a specific threshold.

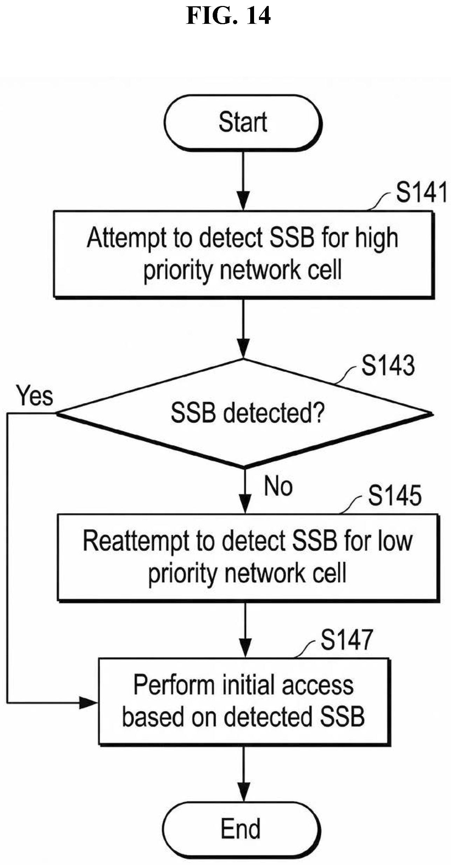

FIGS. 14 to 16 are diagrams for explaining a method for a UE to perform cell search in a frequency band in which an NTN cell and a TN cell coexist.

The UE may preferentially attempt to detect an SSB for a network cell with a higher priority among NTN cells and TN cells for the synchronization raster. The UE may determine whether to additionally attempt detection of the SSB for a lower priority network cell in the synchronization raster in which detection of the SSB for a higher priority network cell has been attempted. In detail, when the UE fails to detect the SSB for a higher priority network cell, the UE may additionally attempt to detect the SSB for a lower priority network cell for the synchronization raster (Alt 2-1). Alternatively, the UE may determine whether to (re)attempt detection of the SSB for a lower priority cell based on information contained in the SSB detected for a higher priority network cell (Alt 2-3).

Alternatively, when both the high priority network cell and the SSB for the high-priority network cell are detected for the synchronization raster, the UE may select/determine a network cell to perform an initial access procedure from among the two network cells based on a quality difference between the two detected SSBs (Alt 2-2).

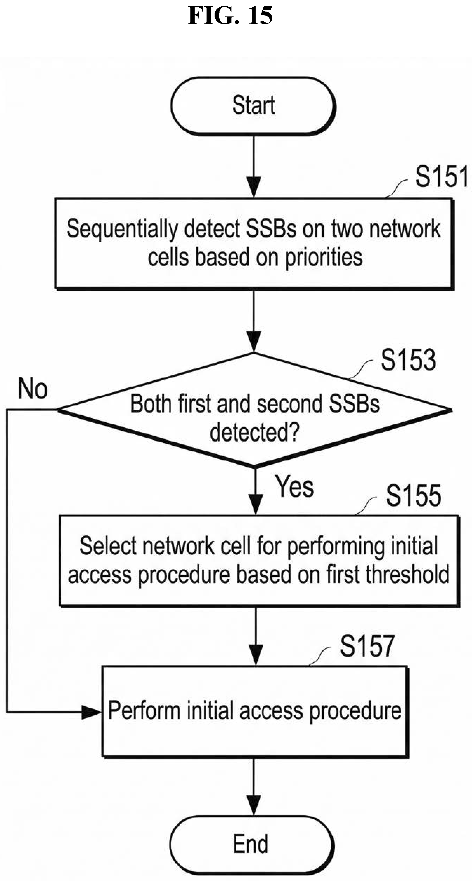

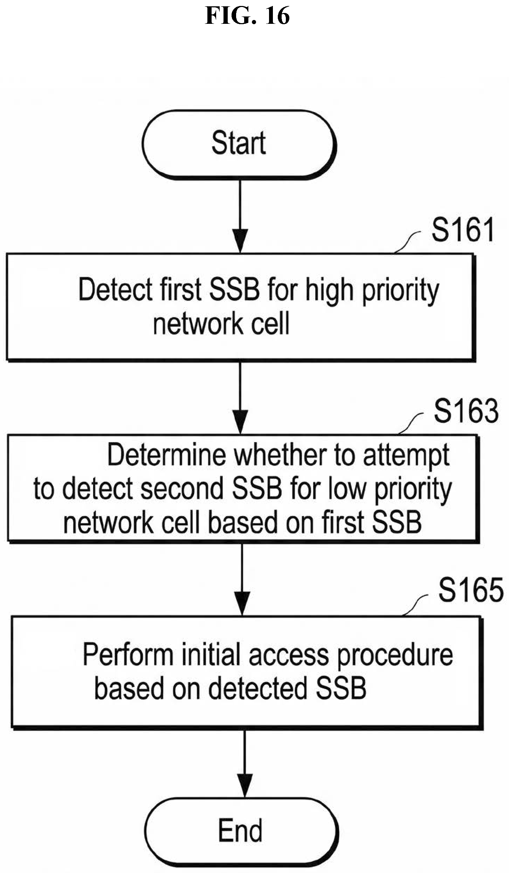

Alt 2-1 above is described in detail with reference to FIG. 14, Alt 2-2 with reference to FIG. 15, and Alt 2-3 with reference to FIG. 16.

### (1) Alt 2-1 (Priority-only)

Alt 2-1 allows the UE to perform a cell search procedure for a frequency band in which the TN cell and the NTN cell coexist, considering only the priority. For example, the UE may attempt to detect an SSB for cell search by considering only the priorities for the TN cell and the NTN cell, and perform an initial access procedure for the detected SSB.

Referring to FIG. 14, the UE may attempt to detect the SSB for the network cell with a higher priority among the NTN cell and the TN cell (S141). For example, the UE may attempt to detect the SSB for the network cell with a higher priority among the NTN cell and the TN cell in the synchronization raster k. When the UE succeeds in detecting the SSB for the high priority network cell in the synchronization raster k (Yes in S143), the UE may not (re)attempt to detect the SSB for the low priority network cell in the synchronization raster k. For example, when the TN cell has a higher priority among the NTN cell and the TN cell, the UE may preferentially perform detection of the SSB for the TN cell in the synchronization raster k, and when detection of the SSB is successful, may not (re)attempt detection of the SSB for the NTN cell in the synchronization raster k.

Alternatively, when the SSB for the high priority network cell is not detected in the synchronization raster k (No in S143), the UE may (re)attempt to detect the SSB for the low priority network cell in the synchronization raster k (S145). For example, when the TN cell has a higher priority among the NTN cell and the TN cell, the UE may preferentially perform detection of the SSB for the TN cell in the synchronization raster k, and when the SSB for the TN cell is not detected in the synchronization raster k, the UE may (re)attempt detection of the SSB for the NTN cell in the synchronization raster. For example, the UE may preferentially detect the SSB for the TN cell by using reception beams for the terrestrial direction in the synchronization raster k, and when detection of the SSB for the TN cell fails, may (re)attempt detection of the SSB for the NTN cell in the synchronization raster k by using reception beams for the sky direction.

Alternatively, when the UE fails to detect the SSB for both the high priority network and the low priority network in the synchronization raster k (i.e., fails to detect the SSBs for both the NTN cell and the TN cell), the UE may reattempt to detect the SSB based on the priorities as described above in a next synchronization raster, a synchronization raster k+1.

Then, the UE may perform an initial access procedure based on the detected SSB (S147). For example, when the high priority network cell is a TN cell and an SSB for the TN cell is detected within the synchronization raster k, the UE may perform an initial access procedure for the TN cell based on the SSB detected for the TN cell. Alternatively, when the UE (re)attempts to detect an SSB for the NTN cell because an SSB for the TN cell is not detected in the synchronization raster k, and when the UE detects an SSB for the NTN cell in the synchronization raster k, the UE may perform the initial access procedure based on the SSB detected for the NTN cell.

For example, the UE may be configured to have a higher priority for the TN cell among the NTN cell and the TN cell. In this case, the UE may preferentially attempt to detect the SSB for the TN cell with a higher priority in the synchronization raster k. When the UE successfully detects the SSB for the high priority TN cell in the synchronization raster k, the UE may perform an initial access procedure for the TN cell based on the detected SSB. The UE may not (re)attempt to detect the SSB for the NTN cell in the synchronization raster k when the detection of the SSB for the TN cell is successful.

### (2) Alt 2-2 (Priority + RSRP threshold)

Alt 2-2 relates to the method of performing a cell search procedure based on a priority and selecting a cell on which to perform an initial access procedure among the NTN cell and the TN cell based on the quality of the detected SSB and a second threshold value by a UE when SSBs are detected for both the NTN cell and the TN cell.

Hereinafter, for convenience of explanation, the SSB for the network cell with a higher priority among the NTN cell and the TN cell is defined as a first SSB, and the SSB for the low priority network cell is defined as a second SSB.

Referring to FIG. 15, the UE may sequentially attempt to detect the SSB for the NTN cell and the TN cell in the synchronization raster k based on the priority (S151). That is, the UE may attempt to detect the SSB in the order of network cells with higher priority to network cells with lower priority for the synchronization raster k. For example, when the TN cell has a higher priority than the NTN cell, the UE may preferentially attempt to detect an SSB (first SSB) for the TN cell (by using reception beams for the terrestrial direction) in the synchronization raster k, and then (re)attempt to detect an SSB (second SSB) for the NTN cell.

For example, the UE may preferentially attempt to detect the first SSB, which is an SSB for the high priority network cell, for the synchronization raster k, and when the first SSB is detected, may (re)attempt to detect the second SSB, which is an SSB for the low priority network cell. In this case, the UE may detect both the first SSB and the second SSB for the synchronization raster k. In other words, the UE may detect not only the SSB for the high priority network cell but also the SSB for the low priority network cell for the synchronization raster.

Then, when both the first SSB and the second SSB are detected for one synchronization raster (Yes in S153), the UE may select a cell for performing the initial access procedure among the high priority network cell and the low priority network cell based on a difference between the qualities of the first SSB and the second SSB and a first threshold (S155). The first threshold may be preconfigured through a higher layer signal or a physical layer signal of a network, or the like.

In detail, when the quality of the second SSB is higher than (or exceeds) the quality of the first SSB by the first threshold, the UE may select a network cell with a low priority as a cell for performing the initial access procedure, even if the network cell is a low priority network cell. In contrast, when the quality of the second SSB is not higher than the quality of the first SSB by more than the threshold value, the UE may select a network cell with a higher priority as a cell for performing the initial access procedure according to the priority. Then, the UE may perform an initial access procedure for the selected network cell (S157).

Here, the quality of the SSB may be reference signals received power (RSRP) measured in detection of the SSB, and the first threshold may be preconfigured/pre-indicated as a threshold value for RSRP. For example, both the first SSB and the second SSB may be detected within the synchronization raster k. In this case, when a value obtained by subtracting the quality RSRP^{high} of the first SSB from the quality RSRP^{low} of the second SSB is equal to or greater than (or exceeds) the first threshold Δ*ₜₕ,* the UE may select the network cell with the lower priority as the cell for the initial access procedure (RSRP^{low} - RSRP^{high} > Δ*ₜₕ*)*.* In contrast, the UE may select the network cell with the higher priority as the cell for the initial access procedure when the value obtained by subtracting the quality RSRP^{high} for the first SSB from the quality RSRP^{low} for the second SSB is less than the first threshold Δ*ₜₕ* (RSRP^{low} - RSRP^{high} < Δ*ₜₕ*).

For example, when the TN cell has a higher priority than the NTN cell, and both the first SSB for the TN cell and the second SSB for the NTN cell are detected for one synchronization raster, the UE may select a cell (or network cell) for the initial access procedure based on a difference between the quality of the first SSB and the quality of the second SSB and the first threshold. When the value obtained by subtracting the quality RSRP^{high} for the first SSB from the quality RSRP^{low} for the second SSB is equal to or greater than (or exceeds) the first threshold △*ₜₕ* (RSRP^{low} - RSRP^{high} > △*ₜₕ*), the UE may select the NTN cell as a cell for performing the initial access procedure and perform the initial access procedure for the NTN cell based on the second SSB. In contrast, when the value obtained by subtracting the quality RSRP^{high} for the first SSB from the quality RSRP^{low} for the second SSB is less than (or equal to or less than) the first threshold △*ₜₕ* (RSRP^{low} - RSRP^{high} < △*ₜₕ*), the UE may select the NTN cell as a cell for performing the initial access procedure and perform the initial access procedure for the TN cell based on the first SSB.

Alternatively, the UE may succeed in detecting only one of the SSB for the TN cell and the SSB for the NTN cell in sequential detection of the SSB for the TN cell and the NTN cell according to the priority (No in S153). For example, the UE may fail to detect the first SSB for the high priority network cell in the synchronization raster k and succeed in detecting the second SSB for the low priority network cell. Alternatively, the UE may fail to detect the second SSB after successfully detecting the first SSB in the synchronization raster k. In this case, the UE may perform an initial access procedure based on the detected SSB for the network cell (S157). For example, if only the first SSB for the TN cell, which is the high priority network cell, is detected, the UE may perform an initial access procedure for the TN cell based on the first SSB. In contrast, when only detection of the second SSB is successful, the UE may perform an initial access procedure for the NTN cell with a low priority based on the second SSB.

Alternatively, the UE may fail to detect SSBs for both the high priority network cell and the low priority network cell within the synchronization raster k. In this case, detection of SSB for the NTN cell and/or the TN cell may be reattempted based on the priority as described above for the synchronization raster k+1, which is a next synchronization raster of the synchronization raster k.

### (3) Alt 2-3 (Priority + indication)

In Alt 2-3, detection of an SSB for a higher priority network cell among the NTN cell and the TN cell is attempted according to the priority, and may determine whether to (re)attempt detection of an SSB for a lower priority network cell based on information included in the detected SSB.

Referring to FIG. 16, the UE may detect the first SSB for the high priority network cell for the synchronization raster (S161). For example, when the TN cell has the high priority, the UE may detect the first SSB for the TN cell by using reception beams for the terrestrial direction in the synchronization raster.

When the first SSB is detected, the UE may obtain indication information indicating presence of the low priority network cell and/or information on the second threshold RSRPₜₕ from the detected first SSB. For example, the UE may obtain a PBCH from the detected first SSB, and may obtain the indication information and the second threshold from a master information block (MIB) included in the PBCH. The UE may determine or identify whether the first SSB is for a TN cell or an NTN cell based on information about the cell associated with the first SSB detected from the MIB. For example, when the TN cell has a high priority, the UE may obtain the indication information on presence or absence of the NTN cell from the first SSB.

Then, the UE may determine whether it is necessary to (re)attempt detection of the second SSB for a lower priority network cell in the synchronization raster in which the first SSB is detected based on the indication information included in the first SSB and the second threshold value (S163).

In detail, when the indication information included in the first SSB indicates presence of the low priority network cell, and the quality of the first SSB is less than (or equal to or less than) the threshold value RSRPₜₕ, the UE may (re)attempt to detect the SSB for the synchronization raster k to detect the second SSB for the low priority network cell.

In contrast, when the quality of the first SSB is equal to or greater than (or exceeds) the threshold value RSRPₜₕ, the UE may not attempt to detect the second SSB for the low priority network cell in the synchronization raster k even when the indication information indicates presence of the low priority network cell.

When determining to attempt detection of the second SSB for the low priority network cell and detection of the second SSB is successful, the UE may determine whether to perform the initial access procedure based on either the first SSB or the second SSB (S165). For example, the UE may perform an initial access procedure for the low priority network cell based on the second SSB when the quality of the second SSB is equal to or higher than the second threshold. Alternatively, as in Alt 2-2 above, when the quality of the second SSB is equal to or greater than the first SSB by a first threshold, an initial access procedure may be performed for the lower priority network cell rather than the higher priority network cell.

In contrast, when the quality of the second SSB is less the second threshold, the UE may perform an initial access procedure for the higher priority network cell according to the priority. Alternatively, when both the qualities of the first SSB and the second SSB are less than the second threshold, the UE may not perform the initial access procedure and reattempt detection of the first SSB and/or the second SSB in a synchronization raster k+1.

For example, the TN cell may have a higher priority than the NTN cell. In this case, the UE may preferentially attempt to detect the first SSB for the TN cell for the synchronization raster k. In other words, the UE may preferentially attempt to detect the first SSB for the TN cell by attempting to detect an SSB by using the reception beams for the terrestrial direction in the synchronization raster k. When the UE detects the first SSB, the UE may determine whether to attempt additional detection of the second SSB for the NTN cell in the synchronization raster k based on the indication information included in the SSB and the second threshold value. When the indication information indicates presence of an NTN cell and the quality of the first SSB is less than (or equal to or less than) the second threshold value, the UE may additionally attempt to detect a second SSB for the NTN cell in the synchronization raster k. For example, the UE may (re)attempt detection of a second SSB for the NTN cell by detecting the SSB by using the reception beams for the sky direction in the synchronization raster k. Then, when the second SSB is detected with a quality measured equal to or greater than (or exceeding) the second threshold, the UE may perform an initial access procedure for the NTN cell based on the second SSB. In contrast, when the quality of the second SSB is less than (or equal to or less than) the second threshold, the UE may perform an initial access procedure for the TN cell based on the first SSB according to the priority. Alternatively, the UE may sequentially attempt to detect the SSB for the NTN cell in the TN cell based on the priority in a next synchronization raster, synchronization raster k+1, without performing an initial access procedure based on the SSBs detected in the synchronization raster k based on the quality of the first SSB and the second SSB being less than the second threshold.

Alternatively, when the first SSB is not detected in the synchronization raster k, the UE may attempt to detect the first SSB in the next synchronization raster k+1. For example, Alt 2-3 differs from Alt 2-1 and/or Alt 2-2 in that the former does not attempt to detect additional SSBs for lower priority network cells when detection of the first SSB for the higher priority network cell fails for the synchronization raster.

As such, in a frequency band in which the TN cell and the NTN cell coexist, the UE may clearly determine which network's cell to preferentially perform cell search according to the priority. That is, the UE may quickly and effectively search for the TN cell by using the reception beams for the terrestrial direction when the TN cell has priority. Alternatively, the UE may quickly and effectively search for the NTN cell by using the reception beams for the sky direction when the NTN cell has priority. Based on the indication information, the UE may easily identify coexistence of an NTN cell and a TN cell in the frequency band, and may clearly determine whether cell search for a low priority network cell is necessary based on the second threshold value. When SSBs for both the TN cell and the NTN cell are detected, the UE may clearly and effectively determine whether to perform an initial access procedure for a cell for which network based on a preconfigured first threshold value.

In some implementations of the present disclosure, the UE or BS transmitting a signal/channel into a transmission beam may be expressed as transmitting the signal/channel into a spatial domain transmission filter. In some implementations of the present disclosure, the UE or BS receiving a signal/channel in a receive beam may be expressed as receiving the signal/channel using a spatial domain receive filter. For example, transmission using the same transmit beam may mean transmission using the same spatial domain transmit filter, and reception using the same receive beam may mean reception using the same spatial domain receive filter.

Here, the wireless communication technology implemented in wireless devices XXX and YYY of the present disclosure may include LTE, NR, and 6G as well as Narrowband Internet of Things for low-power communication. In this case, for example, NB-IoT technology may be an example of low power wide area network (LPWAN) technology, and may be implemented with standards such as LTE Cat NB1 and/or LTE Cat NB2, and is not limited to the names described above. Additionally or alternatively, the wireless communication technology implemented in the wireless devices XXX and YYY of the present disclosure may perform communication based on LTE-M technology. In this case, for example, LTE-M technology may be an example of LPWAN technology and may be called by various names such as enhanced machine type communication (eMTC). For example, LTE-M technology may be implemented by at least one of various standards, including but not limited to 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the names described above. Additionally or alternatively, the wireless communication technology implemented in the wireless devices XXX and YYY of the present disclosure may include at least one of ZigBee, Bluetooth, and low power wide area network (LPWAN) considering low-power communication, and is not limited to the names described above. For example, ZigBee technology may generate personal area networks (PANs) for small/low-power digital communications based on various standards such as IEEE 802.15.4, and may be called by various names.

The embodiments of the present disclosure described above are combinations of elements and features of the present disclosure. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions of any one embodiment may be included in another embodiment and may be replaced with corresponding constructions of another embodiment. It is obvious to those skilled in the art that claims that are not explicitly cited in each other in the appended claims may be presented in combination as an embodiment of the present disclosure or included as a new claim by a subsequent amendment after the application is filed.

In the embodiments of the present disclosure, a description is made, centering on a data transmission and reception relationship between a BS and a UE. This transmission and reception relationship is equally/similarly extended to signal transmission and reception between UEs and relays or BSs and relays. In the present disclosure, a specific operation described as performed by the BS may be performed by an upper node of the BS. Namely, it is apparent that, in a network comprised of a plurality of network nodes including a BS, various operations performed for communication with a UE may be performed by the BS or network nodes other than the BS. The term 'BS' may be replaced with the term 'fixed station', 'Node B', 'evolved Node B (eNode B or eNB)', or 'access point'. The term 'terminal' may be replaced with the term 'UE', 'Mobile Station (MS)', 'Mobile Subscriber Station (MSS)', etc.

The embodiments of the present disclosure may be achieved by various means, for example, hardware, firmware, software, or a combination thereof. In a hardware configuration, an embodiment of the present disclosure may be achieved by one or more application specific integrated circuits (ASICs), digital signal processors (DSPs), digital signal processing devices (DSDPs), programmable logic devices (PLDs), field programmable gate arrays (FPGAs), processors, controllers, microcontrollers, microprocessors, etc.

In a firmware or software configuration, an embodiment of the present disclosure may be implemented in the form of a module, a procedure, a function, etc. Software code may be stored in a memory unit and executed by a processor. The memory unit is located at the interior or exterior of the processor and may transmit and receive data to and from the processor via various known means.

It will be apparent to those skilled in the art that the present disclosure may be embodied in other specific forms without departing from the characteristics of the present disclosure. Accordingly, the detailed description should not be construed as limiting in any respect and should be considered as illustrative. The scope of the present disclosure should be determined by a reasonable interpretation of the appended claims, and all changes within the equivalent scope of the present disclosure are included in the scope of the present disclosure.

### Industrial Applicability

The embodiments of the present disclosure as described above may be applied to various mobile communication systems.

## Claims

1. A method of receiving a downlink signal by a user equipment (UE) in a wireless communication system, the method comprising:
attempting to detect a synchronization signal block (SSB) on a first frequency band in which a terrestrial network (TN) cell and a non-terrestrial network (NTN) cell are supported; and
performing an initial access procedure based on the detected SSB,
wherein the attempting to detect the SSB is preferentially performed on a cell with a higher priority among the TN cell and the NTN cell based on priorities configured for the TN cell and the NTN cell.

2. The method of claim 1, wherein, based on the TN cell having the higher priority, the attempting to detect the SSB is performed in an order of the TN cell to the NTN cell, and
based on detection of both a first SSB for the TN cell and a second SSB for the NTN cell, the initial access procedure is performed for one cell determined among the TN cell and the NTN cell based on a first threshold configured for quality of the SSB and the priority.

3. The method of claim 2, wherein, based on quality of the second SSB being higher than quality of the first SSB by the first threshold, the one cell is determined to be the NTN cell even if the TN has a higher priority.

4. The method of claim 2, wherein, based on quality of the first SSB not being lower than quality of the second SSB by the first threshold, the one cell is determined as the TN cell with the higher priority.

5. The method of claim 1, wherein, based on detection of the SSB including indication information indicating presence of a low priority cell in the SSB and a second threshold and the quality of the SSB being less than the second threshold, the UE attempts to detect the SSB for the low priority cell among the TN cell and the NTN cell.

6. The method of claim 1, wherein the priority is configured based on at least one of a type, mobility, communication environment, or service requirement of the UE.

7. The method of claim 6, wherein, based on whether the type of the UE is a massive machine type communications (mMTC) type, a vehicle to everything (V2X) type, or a narrowband Internet of things (NB-IoT) type, the NTN is configured to a higher priority than the TN.

8. A user equipment (UE) for receiving a downlink signal in a wireless communication system, the UE comprising:
at least one transceiver;
at least one processor; and
at least one computer memory operably connectable to the at least one processor and storing instructions that, when executed, cause the at least one processor to perform operations,
wherein the operations include attempting to detect a synchronization signal block (SSB) on a first frequency band in which a terrestrial network (TN) cell and a non-terrestrial network (NTN) cell are supported, and performing an initial access procedure based on the detected SSB, and
the attempting to detect the SSB is preferentially performed on a cell with a higher priority among the TN cell and the NTN cell based on priorities configured for the TN cell and the NTN cell.

9. A processing cell for receiving a downlink signal in a wireless communication system, the processing device comprising:
at least one processor; and
at least one computer memory operably connectable to the at least one processor and storing instructions that, when executed, cause the at least one processor to perform operations,
wherein the operations include attempting to detect a synchronization signal block (SSB) on a first frequency band in which a terrestrial network (TN) cell and a non-terrestrial network (NTN) cell are supported, and performing an initial access procedure based on the detected SSB, and
the attempting to detect the SSB is preferentially performed on a cell with a higher priority among the TN cell and the NTN cell based on priorities configured for the TN cell and the NTN cell.
